(19)

Europäisches
Patentamt
European
Patent Office
Office européen
des brevets

(11) **EP 4 440 151 A1**

(12) **EUROPEAN PATENT APPLICATION**
published in accordance with Art. 153(4) EPC

(43) Date of publication:
02.10.2024 Bulletin 2024/40

(51) International Patent Classification (IPC):
*H04R 5/00* (2006.01)

(21) Application number: 21965238.5

(86) International application number:
PCT/CN2021/133722

(22) Date of filing: 26.11.2021

(87) International publication number:
WO 2023/092505 (01.06.2023 Gazette 2023/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Beijing Xiaomi Mobile Software Co., Ltd.**
**Beijing 100085 (CN)**

(72) Inventor: **GAO, Shuo**
**Beijing 100085 (CN)**

(74) Representative: **Dehns Germany Partnerschaft mbB**
**Theresienstraße 6-8**
**80333 München (DE)**

(54) **STEREO AUDIO SIGNAL PROCESSING METHOD AND APPARATUS, CODING DEVICE, DECODING DEVICE, AND STORAGE MEDIUM**

(57)    The present disclosure relates to the technical field of communications, and provides stereo audio signal processing methods and apparatuses, a coding device, a decoding device, and a storage medium. The method includes: determining a first cross-correlation coefficient for a left channel signal and a right channel signal of a current frame of a stereo audio signal; in response to the first cross-correlation coefficient being less than a first threshold, obtaining two decorrelation processed channel signals by using a first decorrelation processing method to decorrelate the current frame of the stereo audio signal, calculating a second cross-correlation coefficient for the two decorrelated processed channel signals, in response to the first cross-correlation coefficient being less than the second cross-correlation coefficient, determining a flag bit to be a first value, obtaining a coded stream based on the two decorrelated processed channel signals and writing the flag bit into the coded stream, where a value range of the first threshold is in a range of (-1, 0). The method provided in the present disclosure can greatly improve the coding compression ratio of a near out-of-phase signal.

A first cross-correlation coefficient for a left channel signal and a right channel signal of a current frame of a stereo audio signal is determined — 101

In response to the first cross-correlation coefficient being less than a first threshold, a first decorrelation processing method is used to decorrelate the current frame of the stereo audio signal to obtain two decorrelation processed channel signals, a second cross-correlation coefficient of the two decorrelation processed channel signals is calculated, and in response to the first cross-correlation coefficient being less than the second cross-correlation coefficient, a flag bit is determined to be a first value, and a coded stream is obtained based on the two decorrelation processed channel signals and the flag bit is written to the coded stream — 102

FIG. 1a

**Description**

**TECHNICAL FIELD**

The present disclosure relates to the field of communication technology, and in particular to stereo audio signal processing methods and apparatuses, a coding device, a decoding device, and storage media.

**BACKGROUND**

Lossless coding is widely used for meeting the needs of high-quality audio playback and lossless storage. Usually, when lossless coding is performed on stereo audio signals, the stereo audio signals need to be decorrelated first to improve coding compression ratios.

In the related technology, the main way of decorrelation processing is: setting a threshold of which a value ranges between 0 and 1; calculating a correlation coefficient for a left channel signal and a right channel signal of a current frame of a stereo audio signal; and when the correlation coefficient is greater than the threshold, which indicates that the left channel signal and the right channel signal of the current frame are correlated, i.e., the current frame is a correlated signal, decorrelating the left channel signal and the right channel signal of the current frame; or when the correlation coefficient is less than or equal to the threshold, which is considered by a system that the left channel signal and the right channel signal of the current frame are not correlated, processing the stereo audio signal as an decorrelated signal, i.e., directly identifying the current frame of the stereo audio signal as two decorrelation processed channel signals.

In the related technology, when the current frame is a correlated signal, there are two specific correlation forms, i.e., a near in-phase signal and a near out-of-phase signal. In order to achieve the purpose of improving the compression ratio, the ways of decorrelation processing adopted for different correlation forms are not the same. However, in the related technology, the decorrelation processing can only improve the coding compression ratio of the near in-phase signal, but cannot improve the coding compression rate of the near out-of-phase signal.

**SUMMARY**

The present disclosure proposes stereo audio signal processing methods and apparatuses, a user device, a network side device, and storage media to solve the technical problem of low coding compression ratio of the decorrelation processing method in the related technology.

An embodiment of an aspect of the present disclosure proposes a stereo audio signal processing method, performed by a coding device, including:

determining a first cross-correlation coefficient for a left channel signal and a right channel signal of a current frame of a stereo audio signal;
in response to the first cross-correlation coefficient being less than a first threshold, using a first decorrelation processing method to decorrelate the current frame of the stereo audio signal to obtain two decorrelation processed channel signals, calculating a second cross-correlation coefficient for the two decorrelation processed channel signals, and in response to the first cross-correlation coefficient being less than the second cross-correlation coefficient, determining a flag bit to be a first value, obtaining a coded stream based on the two decorrelation processed channel signals and writing the flag bit into the coded stream, where a value of the first threshold is in a range of (-1, 0).

An embodiment of another aspect of the present disclosure proposes a stereo audio signal processing method, performed by a decoding device, including:

obtaining a coded stream transmitted by a coding device;
determining two decorrelation processed channel signals and a flag bit based on the coded stream; and
in response to the flag bit being a first value, obtaining a reconstructed audio signal by reconstructing the two decorrelation processed channel signals using a first decorrelation reconstructing method, and outputting the reconstructed audio signal.

An embodiment of another aspect of the present disclosure proposes a stereo audio signal processing apparatus, including:

a determining module, for determining a first cross-correlation coefficient for a left channel signal and a right channel signal of a current frame of the stereo audio signal;
a processing module, for, in response to the first cross-correlation coefficient being less than a first threshold, using a first decorrelation processing method to decorrelate the current frame of the stereo audio signal to obtain two decorrelation processed channel signals, calculating a second cross-correlation coefficient for the two decorrelation processed channel signals, and in response to the first cross-correlation coefficient being less than the second cross-correlation coefficient, determining a flag bit to be a first value, obtaining a coded stream based on the two decorrelation processed channel signals, and writing the flag bit into the coded stream, where a value of the first threshold is in a range of (-1, 0).

An embodiment of another aspect of the present disclosure proposes a stereo audio signal processing apparatus, including:

an obtaining module, for obtaining a coded stream transmitted by a coding device;
a determining module, for determining two decorrelation processed channel signals and a flag bit based on the coded stream; and
a processing module, for, in response to the flag bit being a first value, obtaining a reconstructed audio signal by reconstructing the two decorrelation processed channel signals using a first decorrelation reconstructing method and outputting a reconstructed audio signal.

An embodiment of another aspect of the present disclosure proposes a communication apparatus, including a processor and a memory, the memory having a computer program stored therein, the processor executing the computer program stored in the memory to cause the communication device to perform the method as set forth in the above embodiment of the aspect.

An embodiment of another aspect of the present disclosure proposes a communication device, including a processor and a memory, the memory having a computer program stored therein, the processor executing the computer program stored in the memory to cause the communication device to perform the method as set forth in the above embodiment of the aspect.

An embodiment of another aspect of the present disclosure proposes a communication apparatus, comprising: a processor and an interface circuit;

the interface circuit, for receiving code instructions and transmitting the code instructions to the processor; and
the processor, for running the code instructions to perform the method as proposed in the above embodiment of the aspect.

An embodiment of another aspect of the present disclosure proposes a communication apparatus, comprising: a processor and an interface circuit;

the interface circuit, for receiving code instructions and transmitting the code instructions to the processor; and
the processor, for running the code instructions to perform the method as proposed in the above embodiment of the aspect.

An embodiment of another aspect of the present disclosure proposes a computer-readable storage medium for storing instructions, in response to the instructions being executed, implementing the method as set forth in the embodiment of the aspect.

An embodiment of another aspect of the present disclosure proposes a computer-readable storage medium for storing instructions, in response to the instructions being executed, to implement the method as set forth in the embodiment of the aspect.

In summary, in the stereo audio signal processing method provided in embodiments of the present disclosure, the first cross-correlation coefficient for the left channel signal and the right channel signal of the current frame of the stereo audio signal is firstly determined. In response to the first cross-correlation coefficient being less than the first threshold, the first decorrelation processing method is used to perform decorrelation processing on the current frame of the stereo audio signal in order to obtain the two decorrelation processed channel signals. And thereafter, a second cross-correlation coefficient of the two decorrelation processed channel signals is calculated. In response to the first cross-correlation coefficient being less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the compression ratio of the near out-of-phase signal.

## BRIEF DESCRIPTION OF DRAWINGS

The foregoing and/or additional aspects and advantages of the present disclosure will become apparent and readily understood from the following description of embodiments in conjunction with the accompanying drawings, where:

FIG. 1a is a schematic flow chart of a stereo audio signal processing method provided by embodiments of the present disclosure;
FIG. 1b is a block diagram of a process for obtaining a coded stream based on two decorrelation processed channel signals provided by embodiments of the present disclosure;
FIG. 2 is a schematic flow chart of a stereo audio signal processing method provided by embodiments of the present disclosure;
FIG. 3a is a schematic flow chart of a stereo audio signal processing method provided by embodiments of the present disclosure;
FIG. 3b is a schematic flow chart of a stereo audio signal processing method provided by embodiments of the present disclosure;
FIG. 3c is a schematic flow chart of a stereo audio signal processing method provided by embodiments of the present disclosure;
FIG. 4a is a schematic flow chart of a stereo audio signal processing method provided by embodiments of the present disclosure;
FIG. 4b is a block diagram of a process for determining two decorrelation processed channel signals based on a coded stream provided by embodiments of the present disclosure;
FIG. 5 is a schematic flow chart of a stereo audio signal processing method provided by embodiments of the present disclosure;
FIG. 6 is a schematic flow chart of a stereo audio signal processing method provided by embodiments of the present disclosure;
FIG. 7 is a schematic structure diagram of a stereo audio signal processing apparatus provided by embodiments of the present disclosure;
FIG. 8 is a schematic structure diagram of a stereo audio signal processing apparatus provided by embodiments of the present disclosure;
FIG. 9 is a block diagram of a user device provided by an embodiment of the present disclosure;
FIG. 10 is a block diagram of a network side device provided by an embodiment of the present disclosure.

## DETAILED DESCRIPTION

Embodiments will be described herein in detail, examples of which are represented in the accompanying drawings. When the following descriptions involve the drawings, like numerals in different drawings represent like or similar elements unless stated otherwise. Implementations described in the following examples do not represent all implementations consistent with the embodiments of the present disclosure. Instead, they are merely examples of device and methods consistent with certain aspects of the embodiments of the present disclosure, as detailed in the appended claims.

Terms used in the present disclosure are for the purpose of describing particular examples only and are not intended to limit the embodiments of the present disclosure. As used in the embodiments of the present disclosure and the appended claims, the singular forms "an" and "the" are intended to include the plural forms as well, unless the context clearly indicates otherwise. It should also be understood that the term "and/or" as used herein refers to and includes any and all possible combinations of one or more of the associated listed items.

It shall be understood that, although the terms "first," "second," "third," and the like may be used herein to describe various information, the information should not be limited by these terms. These terms are only used to distinguish one category of information from another. For example, without departing from the scope of the embodiments of the present disclosure, first information may be referred as second information; and similarly, second information may also be referred as first information. Depending on the context, the term "if' may be interpreted as "when" or "upon" or "in response to determining".

The stereo audio signal processing methods and apparatuses, coding device, decoding device, and storage medium provided in embodiments of the present disclosure are described in detail below with reference to the accompanying drawings.

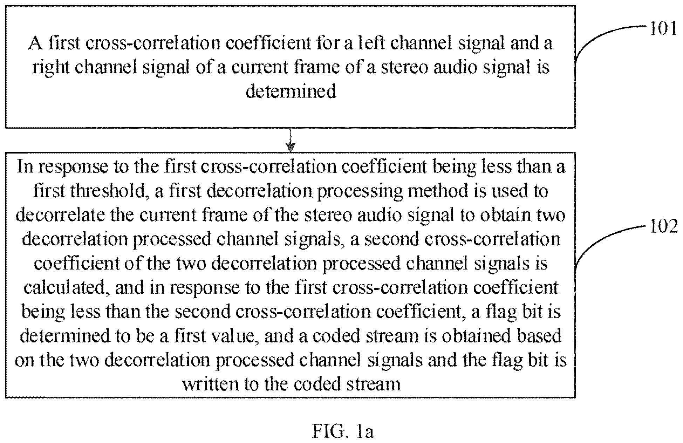

FIG. 1a is a schematic flow chart of a stereo audio signal processing method provided by embodiments of the present disclosure, the method being performed by a coding device. As shown in FIG. 1a, the stereo audio signal processing method includes the following steps.

Step 101: a first cross-correlation coefficient for a left channel signal and a right channel signal of a current frame of a stereo audio signal is determined.

In one embodiment of the present disclosure, in response to receiving the input stereo audio signal by the coding device, the current frame of the stereo audio signal may be analyzed for cross-correlation to obtain the first cross-correlation coefficient for the left channel signal and the right channel signal of the current frame.

Also, in an embodiment of the present disclosure, the method of determining the first cross-correlation coefficient for the left channel signal and the right channel signal of the current frame of the stereo audio signal may include: determining the first cross-correlation coefficient for the left channel signal and the right channel signal based on a formula III, where the formula III is:

$$
\begin{cases}
\eta_{(LR)} = \dfrac{\sum_{n=1}^{N}(L(n) - \overline{L}) \times (R(n) - \overline{R})}{\sqrt{\sum_{n=1}^{N}(L(n) - \overline{L})^2} \times \sqrt{\sum_{n=1}^{N}(R(n) - \overline{R})^2}} \\[2em]
\overline{L} = \dfrac{\sum_{n=1}^{N} L(n)}{N} \\[1.5em]
\overline{R} = \dfrac{\sum_{n=1}^{N} R(n)}{N}
\end{cases}
$$

where the $\eta_{(LR)}$ is the cross-correlation coefficient for the left channel signal and the right channel signal of the current frame, the L(n) is a $n^{th}$ sample point of the left channel signal of the current frame, the $\overline{L}$ is an average of all sample points of the left channel signal of the current frame, the R(n) is a $n^{th}$ sample point of the right channel signal of the current frame, the R is an average of all sample points of the right channel signal of the current frame, and the N is a total number of sample points of the left channel signal or the right channel signal of the current frame, i.e., a length of the current frame.

Step 102: in response to the first cross-correlation coefficient being less than a first threshold, a first decorrelation processing method is used to decorrelate the current frame of the stereo audio signal to obtain two decorrelation processed channel signals, a second cross-correlation coefficient for the two decorrelation processed channel signals is calculated, and in response to the first cross-correlation coefficient being less than the second cross-correlation coefficient, a flag bit is determined to be a first value, and a coded stream is obtained based on the two decorrelation processed channel signals and the flag bit is written to the coded stream.

In an embodiment of the present disclosure, the first threshold may be predetermined, and a value of the first threshold is in the range of (-1, 0). In an embodiment of the present disclosure, the value of the first threshold may be within [-0.5, -0.1]. Specifically, in an embodiment of the present disclosure, the value of the first threshold may be -0.3.

Also, in an embodiment of the present disclosure, in response to the first cross-correlation coefficient being less than the first threshold, it is indicated that the left channel signal and the right channel signal of the current frame are negatively correlated therebetween, i.e., the current frame is a near out-of-phase signal. At this time, the first decorrelation processing method may be used to decorrelate the current frame of the stereo audio signal to obtain the two decorrelation processed channel signals. In an embodiment of the present disclosure, the first decorrelation processing method may be a first Mid/Side down-mixing processing. Specifically, the first Mid/Side down-mixing processing may include: processing the left channel signal and the right channel signal to obtain a primary channel signal and a secondary channel signal based on a formula I, where the formula I is:

$$
\begin{cases}
\mathrm{Mid(n)} = \dfrac{\left(L(n) - R(n)\right)}{2} \\[1.5em]
\mathrm{Sid(n)} = L(n) + R(n)
\end{cases}
$$

where the Mid(n) is the primary channel signal in the two decorrelation processed channel signals, the Sid(n) is the secondary channel signal in the two decorrelation processed channel signals, the L(n) is the left channel signal, and the $R(n)$ is the right channel signal.

As can be seen, embodiments of the present disclosure may determine whether the current frame of the stereo audio signal is a near out-of-phase signal, and, in response to determining that the current frame of the stereo audio signal is a near out-of-phase signal, a first decorrelation processing method is used corresponding to the near out-of-phase signal to decorrelate the current frame of the stereo audio signal so as to obtain two decorrelation processed channel signals, thereby greatly improving the coding compression ratio of the near out-of-phase signal.

Further, it should be noted that, in the communication system, there may exist a situation in which the cross-correlation of the two-channel signal obtained after the audio signal is decorrelated is greater than or equal to the cross-correlation of the two channels of the audio signal before the decorrelation process, that is, the decorrelation process does not achieve the purpose of decorrelation. Thus, in an embodiment of the present disclosure, after obtaining the two decorrelation processed channel signals by performing the first decorrelation process on the current frame, a second cross-correlation coefficient for the two decorrelation processed channel signals may be further calculated, and a magnitude relationship between the second cross-correlation coefficient (i.e., after the decorrelation process) and the first cross-correlation coefficient (i.e., before the decorrelation process) may be determined to determine whether the first decorrelation process achieves the purpose of decorrelation.

In an embodiment of the present disclosure, the method of calculating the second cross-correlation coefficient for the two decorrelation processed channel signals may include:

determining the second cross-correlation coefficient based on formula IV, where the formula IV is:

$$\begin{cases} \eta_{(MS)} = \dfrac{\sum_{n=1}^{N}\left(\mathrm{Mid}(n) - \overline{\mathrm{Mid}}\right) \times \left(\mathrm{Sid}(n) - \overline{\mathrm{Sid}}\right)}{\sqrt{\sum_{n=1}^{N}\left(\mathrm{Mid}(n) - \overline{\mathrm{Mid}}\right)^2} \times \sqrt{\sum_{n=1}^{N}\left(\mathrm{Sid}(n) - \overline{\mathrm{Sid}}\right)^2}} \\[4mm] \overline{\mathrm{Mid}} = \dfrac{\sum_{n=1}^{N}\mathrm{Mid}(n)}{N} \\[4mm] \overline{\mathrm{Sid}} = \dfrac{\sum_{n=1}^{N}\mathrm{Sid}(n)}{N} \end{cases}$$

where the $\eta_{(MS)}$ is the second cross-correlation coefficient, the $\mathrm{Mid}(n)$ is a $n^{th}$ sample point of the primary channel signal of the two decorrelation processed channel signals, the $\overline{\mathrm{Mid}}$ is an average of all sample points of the primary channel signal of the two decorrelation processed channel signals, the $\mathrm{Sid}(n)$ is a $n^{th}$ sample point of the secondary channel signal of the two decorrelation processed channel signals, the $\overline{\mathrm{Sid}}$ is an average of all sample points of the secondary channel signal of the two decorrelation processed channel signals, and the N is a total number of sample points of the left channel signal or the right channel signal of the current frame, i.e., a length of the current frame.

Also, in an embodiment of the present disclosure, in response to the first cross-correlation coefficient being less than the second cross-correlation coefficient, it is determined that the first decorrelation processing method achieves the purpose of decorrelation.

Specifically, it should be recognized that the magnitude of the cross-correlation between signals is positively related with an absolute value of the cross-correlation coefficient. And, for a near out-of-phase signal with a negative cross-correlation coefficient, the lower the value of the cross-correlation coefficient and the higher the absolute value of the cross-correlation coefficient, the better the negative cross-correlation.

Based on this, in an embodiment of the present disclosure, since the current frame of the stereo audio signal is the near out-of-phase signal, if the first cross-correlation coefficient is less than the second cross-correlation coefficient, it is indicated that the negative cross-correlation of the two channels of the audio signal before performing the first decorrelation processing method is higher than the negative cross-correlation of the two-channel signal obtained after performing the first decorrelation processing method. And thus, it can be determined that the first decorrelation processing method achieves the purpose of decorrelation.

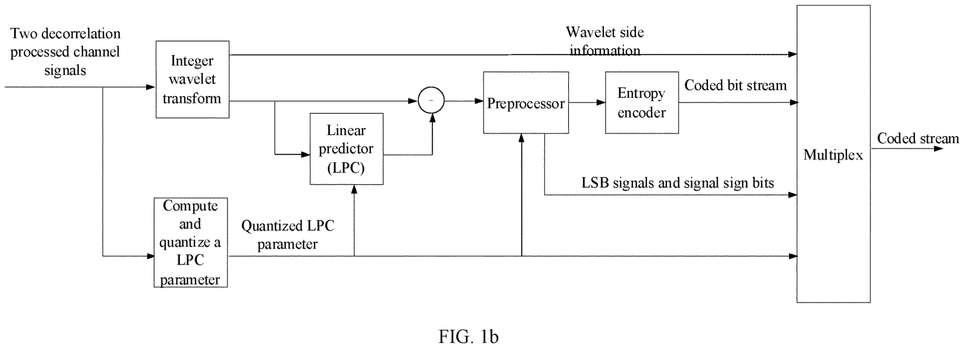

Also, in an embodiment of the present disclosure, in response to determining that the first decorrelation processing method achieves the purpose of decorrelation, the coded stream may be obtained based on the two decorrelation processed channel signals. In an embodiment of the present disclosure, FIG. 1b is a block diagram of a process for obtaining the coded stream based on the two decorrelation processed channel signals provided by embodiments of the present disclosure. As shown in FIG. 1b, a method of obtaining the coded stream based on the two decorrelation processed channel signals may be as follows.

The two decorrelation processed channel signals are divided into subbands by using integer wavelet transform to obtain subband signals. Linear prediction coefficient (LPC) parameters of the two decorrelation processed channel signals are computed and quantized to obtain quantized LPC parameters. And each of the subband signals is predicted based on the quantized LPC parameters by using a linear predictor to generate a predicted residual signal respectively. The predicted residual signal is normalized by using a preprocessor to generate a normalized output signal, a least significant bit (LSB) signal and a signal sign bit. The normalized output signals corresponding to the subband signals are entropy encoded by using an entropy encoder to generate a coded bit stream. And then the coded bit stream, the LSB signals, the signal sign bits, the quantized LPC parameters and wavelet side information are multiplexed to obtain the coded stream.

Further, in an embodiment of the present disclosure, in response to obtaining the coded stream, the flag bit may be determined to be the first value (e.g., may be 0) which may be used to indicate that decorrelation processing is performed by the coding device according to the first decorrelation processing method. And the flag bit may be written into the coded stream to be transmitted to the decoding device, so that the decoding device may adopt a corresponding decorrelation reconstructing method to perform reconstruction based on the flag bit.

Furthermore, it is to be noted that in an embodiment of the present disclosure, the first thresholds corresponding to different frames of the stereo audio signal respectively may be different. In response to the first thresholds corresponding to the different frames respectively being different, specifically, the first cross-correlation coefficient for the left channel signal and the right channel signal of the current frame is compared with the first threshold corresponding to the current frame.

It should also be noted that the above contents of the present embodiment describe processing the stereo audio signal based on the cross-correlation between the left channel signal and the right channel signal of the current frame of the stereo audio signal. In another embodiment of the present disclosure, the stereo audio signal may also be processed based on a phase between the left channel signal and the right channel signal of the current frame of the stereo audio signal. Specifically, a first phase between the left channel signal and the right channel signal of the current frame may be firstly determined. If the first phase between the left channel signal and the right channel signal of the current frame lies in a first interval, the stereo audio signal is determined as the near out-of-phase signal, the current frame of the stereo audio signal is decorrelated by using the first decorrelation processing method to obtain the two decorrelation processed channel signals, and a second phase between the two decorrelation processed channel signals is calculated. In response to the first phase being greater than the second phase, it is indicated that the first decorrelation processing method achieves the purpose of decorrelation. The flag bit is determined to be the first value, the coded stream is obtained based on the two decorrelation processed channel signals, and the flag bit is written into the coded stream to be transmitted to the decoding device. The first interval may be [135°, 180°].

In summary, in the stereo audio signal processing method provided in embodiments of the present disclosure, the first cross-correlation coefficient for the left channel signal and the right channel signal of the current frame of the stereo audio signal is firstly determined. In response to the first cross-correlation coefficient being less than the first threshold, the first decorrelation processing method is used to perform decorrelation processing on the current frame of the stereo audio signal in order to obtain the two decorrelation processed channel signals. And thereafter, a second cross-correlation coefficient for the two decorrelation processed channel signals is calculated. In response to the first cross-correlation coefficient being less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the coding compression ratio of the near out-of-phase signal.

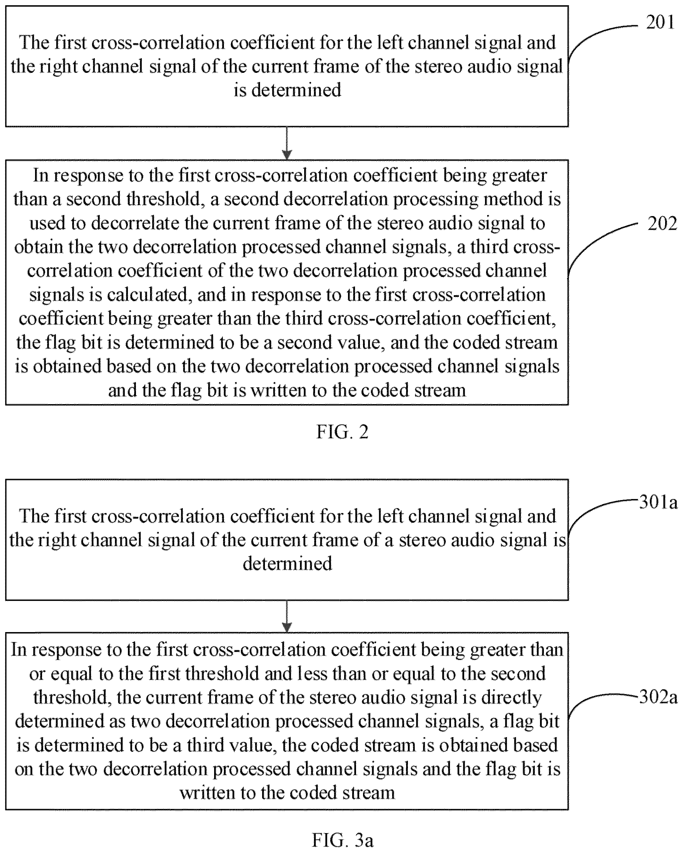

FIG. 2 is a flow chart of a stereo audio signal processing method provided by embodiments of the present disclosure which is performed by the coding device. As shown in FIG. 2, the stereo audio signal processing method includes the following steps.

Step 201: the first cross-correlation coefficient for the left channel signal and the right channel signal of the current frame of the stereo audio signal is determined.

A related description of step 201 can be found in the description of the above embodiments, and the embodiments of the present disclosure will not repeat the related description herein.

Step 202: in response to the first cross-correlation coefficient being greater than a second threshold, a second decorrelation processing method is used to decorrelate the current frame of the stereo audio signal to obtain the two decorrelation processed channel signals, a third cross-correlation coefficient for the two decorrelation processed channel signals is calculated, and in response to the first cross-correlation coefficient being greater than the third cross-correlation coefficient, the flag bit is determined to be a second value, and the coded stream is obtained based on the two decorrelation processed channel signals and the flag bit is written to the coded stream.

In an embodiment of the present disclosure, the second threshold may be predetermined, and a value of the second threshold may be in a range of (0, 1). In an embodiment of the present disclosure, the value of the second threshold may be between [0.1, 0.5]. Specifically, in an embodiment of the present disclosure, the value of the second threshold may be 0.3.

Also, in an embodiment of the present disclosure, in response to the second cross-correlation coefficient being greater than the first threshold, it is indicated that the left channel signal and the right channel signal of the current frame are positively correlated therebetween, i.e., the current frame is a near in-phase signal. At this time, the second decorrelation processing method may be used to decorrelate the current frame of the stereo audio signal to obtain the two decorrelation processed channel signals. In an embodiment of the present disclosure, the second decorrelation processing method may be a second Mid/Side down-mixing processing. Specifically, the second Mid/Side down-mixing processing may include: processing the left channel signal and the right channel signal to obtain a primary channel signal and a secondary channel signal based on a formula II, where the formula II is:

$$\begin{cases} \mathrm{Mid(n)} = \dfrac{\left(L(n) + R(n)\right)}{2} \\ \mathrm{Sid(n)} = L(n) - R(n) \end{cases}$$

where the Mid(n) is the primary channel signal of the two decorrelation processed channel signals, the Sid(n) is the secondary channel signal of the two decorrelation processed channel signals, the $L(n)$ is the left channel signal, and the $R(n)$ is the right channel signal.

As can be seen, embodiments of the present disclosure may determine whether the current frame of the stereo audio signal is the near in-phase signal, and, in response to determining that the current frame of the stereo audio signal is the near in-phase signal, the second decorrelation processing method corresponding to the near in-phase signal is used to decorrelate the current frame of the stereo audio signal so as to obtain the two decorrelation processed channel signals, thereby greatly improving the coding compression ratio of the near in-phase signal.

Further, it should be noted that, in the communication system, there may exist a situation in which the correlation of the two-channel signal obtained after the audio signal is decorrelated is greater than or equal to the correlation of the two channels of the audio signal before the decorrelation process, that is, the decorrelation process does not achieve the purpose of decorrelation. Thus, in an embodiment of the present disclosure, after obtaining the two decorrelation processed channel signals by performing the second decorrelation process on the current frame, a third cross-correlation coefficient for the two decorrelation processed channel signals may be further calculated, and a magnitude relationship between the third cross-correlation coefficient (i.e., after the decorrelation process) and the first cross-correlation coefficient (i.e., before the decorrelation process) may be determined to determine whether the second decorrelation process achieves the purpose of decorrelation.

In an embodiment of the present disclosure, a method of calculating the third cross-correlation coefficient for the two decorrelation processed channel signals may include:

determining the third cross-correlation coefficient based on a formula IV, where the formula IV is:

$$\begin{cases} \eta_{\text{(MS)}} = \dfrac{\sum_{n=1}^{N}\left(\mathrm{Mid(n)} - \overline{\mathrm{Mid}}\right) \times \left(\mathrm{Sid(n)} - \overline{\mathrm{Sid}}\right)}{\sqrt{\sum_{n=1}^{N}\left(\mathrm{Mid(n)} - \overline{\mathrm{Mid}}\right)^2} \times \sqrt{\sum_{n=1}^{N}\left(\mathrm{Sid(n)} - \overline{\mathrm{Sid}}\right)^2}} \\ \overline{\mathrm{Mid}} = \dfrac{\sum_{n=1}^{N}\mathrm{Mid(n)}}{N} \\ \overline{\mathrm{Sid}} = \dfrac{\sum_{n=1}^{N}\mathrm{Sid(n)}}{N} \end{cases}$$

where the $\eta_{\text{(MS)}}$ is the third cross-correlation coefficient, the Mid(n) is a $n^{\text{th}}$ sample point of the primary channel signal of the two decorrelation processed channel signals, the $\overline{\mathrm{Mid}}$ is an average of all sample points of the primary channel signal of the two decorrelation processed channel signals, the Sid(n) is a $n^{\text{th}}$ sample point of the secondary channel signal of the two decorrelation processed channel signals, the $\overline{\mathrm{Sid}}$ is an average of all sample points of the secondary channel signal of the two decorrelation processed channel signals, the N is a total number of sample points of the left channel signal or the right channel signal of the current frame, i.e., a length of the current frame.

Also, in an embodiment of the present disclosure, in response to the first cross-correlation coefficient being greater than the third cross-correlation coefficient, it is determined that the second decorrelation processing method achieves the purpose of decorrelation.

Specifically, it should be recognized that magnitude of correlation between signals is positively related with an absolute value of the correlation coefficient. And, for a near in-phase signal with a positive correlation coefficient, the lower the value of the cross-correlation coefficient and the smaller the absolute value of the cross-correlation coefficient, the worse the positive correlation.

Based on this, since the current frame of the stereo audio signal is the near in-phase signal, if the first cross-correlation coefficient is greater than the third cross-correlation coefficient, it is indicated that the positive correlation of the two channels of the audio signal before performing the second decorrelation process method is higher than the positive correlation of the two-channel signal after performing the second decorrelation process method. And thus, it can be determined that the second decorrelation process method achieves the purpose of decorrelation.

Also, in an embodiment of the present disclosure, in response to determining that the second decorrelation processing method achieves the purpose of decorrelation, the coded stream may be obtained based on the two decorrelation processed channel signals, and the flag bit may be determined to be the second value (e.g., 1) which may be used to indicate that the decorrelation process performed by the coding device adopts the second decorrelation processing method. And the flag bit may be written into the coded stream and transmitted to the decoding device, so that the decoding device may adopt a corresponding decorrelation reconstructing method based on the flag bit to perform reconstructing.

The specific method of obtaining the coded stream based on the two decorrelation processed channel signals described above can be referred to the preceding embodiments, and the embodiments of the present disclosure will not repeat the specific method herein.

Furthermore, it is to be noted that in an embodiment of the present disclosure, the second thresholds corresponding to different frames of the stereo audio signal respectively may be different. In response to the second thresholds corresponding to the different frames respectively being different, the first cross-correlation coefficient for the left channel signal and the right channel signal of the current frame may be compared with the second threshold corresponding to the current frame.

It should also be noted that the above contents of the present embodiment describe processing the stereo audio signal based on the cross-correlation between the left channel signal and the right channel signal of the current frame of the stereo audio signal. In another embodiment of the present disclosure, the stereo audio signal may also be processed based on a phase between the left channel signal and the right channel signal of the current frame of the stereo audio signal. Specifically, the first phase between the left channel signal and the right channel signal of the current frame may be firstly determined. If the first phase between the left channel signal and the right channel signal of the current frame lies in a second interval, the current frame of the stereo audio signal is determined to be the near in-phase signal, the current frame of the stereo audio signal is decorrelated by using a second decorrelation processing method to obtain the two decorrelation processed channel signals, and a third phase between the two decorrelation processed channel signals is calculated. In response to the first phase being greater than the third phase, it is indicated that the second decorrelation processing method achieves the purpose of decorrelation. The flag bit is determined to be the second value, a coded stream is obtained based on the two decorrelation processed channel signals, and the flag bit is written into the coded stream to be transmitted to the decoding device. The second interval may be [0°, 45°].

In summary, in the stereo audio signal processing method provided in embodiments of the present disclosure, the first cross-correlation coefficient for the left channel signal and the right channel signal of the current frame of the stereo audio signal is firstly determined. When the first cross-correlation coefficient is less than the first threshold, the first decorrelation processing method is used to perform decorrelation processing on the current frame of the stereo audio signal to obtain the two decorrelation processed channel signals. And thereafter, the second cross-correlation coefficient for the two decorrelation processed channel signals is calculated. When the first cross-correlation coefficient is less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the coding compression ratio of the near out-of-phase signal.

FIG. 3a is a schematic flow chart of a stereo audio signal processing method provided by embodiments of the present disclosure which is performed by the coding device. As shown in FIG. 3a, the stereo audio signal processing method may include the following steps.

Step 301a, the first cross-correlation coefficient for the left channel signal and the right channel signal of the current frame of a stereo audio signal is determined.

A related description of step 301a can be found in the description of the above embodiments, and the embodiments of the present disclosure will not repeat the related description herein.

Step 302a, in response to the first cross-correlation coefficient being greater than or equal to the first threshold and less than or equal to the second threshold, the current frame of the stereo audio signal is directly determined as two decorrelation processed channel signals, a flag bit is determined to be a third value, the coded stream is obtained based on the two decorrelation processed channel signals and the flag bit is written to the coded stream.

In an embodiment of the present disclosure, the first threshold may be predetermined, and the value of the first threshold may be in the range of (-1, 0). In an embodiment of the present disclosure, the value of the first threshold may be between [-0.5, -0.1]. Specifically, in an embodiment of the present disclosure, the value of the first threshold may be -0.3. And, in an embodiment of the present disclosure, the second threshold may be predetermined, and a value of the second threshold may be in a range of (0, 1). In embodiment of the present disclosure, the value of the second threshold may be between [0.1, 0.5]. Specifically, in an embodiment of the present disclosure, the value of the second threshold may be 0.3.

Further, in an embodiment of the present disclosure, when the first cross-correlation coefficient is greater than or equal to the first threshold and less than or equal to the second threshold, it is indicated that the left channel signal and the right channel signal of the current frame are not correlated. At this time there is no need to perform a decorrelation process on the current frame of the stereo audio signal, and the current frame of the stereo audio signal can be directly determined as two decorrelation processed channel signals. The coded stream is obtained based on the two decorrelation processed channel signals. The flag bit is determined to be a third value (e.g., 2) which may be used to indicate that the decorrelation processing has not been used by the coding device, and may be written into the coded stream to be transmitted to a decoding device, so that the decoding device may perform corresponding reconstructing based on the flag bit.

A specific method of obtaining the coded stream based on the two decorrelation processed channel signals described above can be referred to in the preceding embodiments, and the embodiments of the present disclosure will not repeat the specific method herein.

It should also be noted that the above contents of the present embodiment describe processing the stereo audio signal based on the cross-correlation between the left channel signal and the right channel signal of the current frame of the stereo audio signal. In another embodiment of the present disclosure, the stereo audio signal may also be processed based on a phase between the left channel signal and the right channel signal of the current frame of the stereo audio signal. Specifically, the first phase between the left channel signal and the right channel signal of the current frame may be firstly determined. If the first phase between the left channel signal and the right channel signal of the current frame lies in a third interval, the current frame of the stereo audio signal is determined as an uncorrelated signal, the current frame of the stereo audio signal is directly determined as the two decorrelation processed channel signals, the flag bit is determined as the third value, the coded stream is obtained based on the two decorrelation processed channel signals and the flag bit is written to the coded stream to be transmitted to the decoding device. The third interval may be (45°, 135°).

In summary, in the stereo audio signal processing method provided in embodiments of the present disclosure, the first cross-correlation coefficient for the left channel signal and the right channel signal of the current frame of the stereo audio signal is firstly determined. When the first cross-correlation coefficient is less than the first threshold, the first decorrelation processing method is used to perform decorrelation processing on the current frame of the stereo audio signal in order to obtain the two decorrelation processed channel signals. And thereafter, a second cross-correlation coefficient for the two decorrelation processed channel signals is calculated. In response to the first cross-correlation coefficient being less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the coding compression ratio of the near out-of-phase signal.

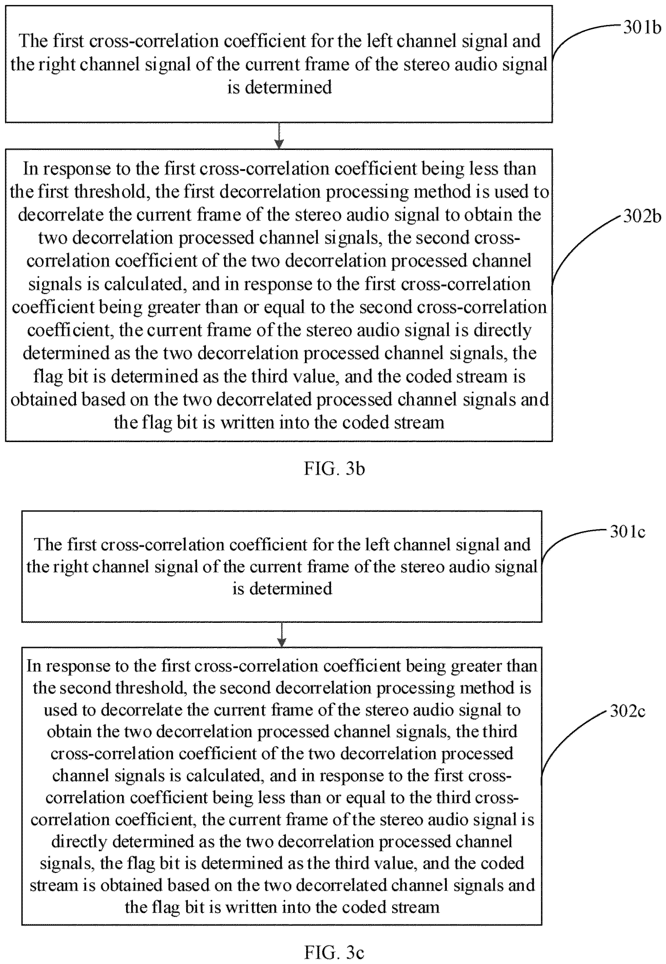

FIG. 3b is a schematic flow chart of a stereo audio signal processing method provided by embodiments of the present disclosure which is performed by the coding device. As shown in FIG. 3b, the stereo audio signal processing method includes the following steps.

Step 301b, the first cross-correlation coefficient for the left channel signal and the right channel signal of the current frame of the stereo audio signal is determined.

A related description of step 301b can be found in the description of the above embodiments, and the embodiments of the present disclosure will not repeat the related description herein.

Step 302b, in response to the first cross-correlation coefficient being less than the first threshold, the first decorrelation processing method is used to decorrelate the current frame of the stereo audio signal to obtain the two decorrelation processed channel signals, the second cross-correlation coefficient for the two decorrelation processed channel signals is calculated, and in response to the first cross-correlation coefficient being greater than or equal to the second cross-correlation coefficient, the current frame of the stereo audio signal is directly determined as the two decorrelation processed channel signals, the flag bit is determined as the third value, and the coded stream is obtained based on the two decorrelation processed channel signals and the flag bit is written into the coded stream.

A related detailed description of the first threshold, the first decorrelation processing method, the first cross-correlation coefficient and the second cross-correlation coefficient can be referred to the above-described embodiments, and the embodiments of the present disclosure will not repeat the related detailed description herein.

Also, in an embodiment of the present disclosure, in response to the first cross-correlation coefficient being less than the first threshold and greater than or equal to the second cross-correlation coefficient, it is determined that the first decorrelation processing method does not achieve the purpose of decorrelation.

Specifically, with reference to the foregoing, it can be seen that in response to the first cross-correlation coefficient being less than the first threshold, it is indicated that the current frame of the stereo audio signal is the near out-of-phase signal (i.e., the smaller the correlation coefficient is, the higher the negative correlation is). If the first cross-correlation coefficient (i.e., the cross-correlation coefficient before the decorrelation processing) is greater than or equal to the second cross-correlation coefficient (i.e., the cross-correlation coefficient after the decorrelation processing), it is indicated that the negative correlation of the two channels of the audio signal before the first decorrelation processing is lower than the negative correlation of the two-channel signal after the first decorrelation processing. Thus, it can be determined that the first decorrelation processing method does not achieve the purpose of decorrelation.

Based on this, in an embodiment of the present disclosure, in response to determining that the first decorrelation processing method does not achieve the purpose of decorrelation, the coding compression ratio will be greatly reduced if coding is continued based on the decorrelated processed two-channel signal obtained by the first decorrelation processing method. Therefore, in the present disclosure, the current frame of the stereo audio signal can be directly determined as the two decorrelation processed channel signals, the flag bit can be determined to be the third value (e.g., 2), the coded stream can be obtained based on the two decorrelation processed channel signals, and the flag bit can be written into the coded stream to be transmitted to the decoding device, so as to ensure the subsequent coding compression ratio. A related description of this part can be referred to the preceding embodiments, and the embodiments of the present disclosure will not repeat the related description herein.

It should also be noted that the above contents of the present embodiment describe processing the stereo audio signal based on the cross-correlation between the left channel signal and the right channel signal of the current frame of the stereo audio signal. In another embodiment of the present disclosure, the stereo audio signal may also be processed based on the phase between the left channel signal and the right channel signal of the current frame of the stereo audio signal. Specifically, the first phase between the left channel signal and the right channel signal of the current frame may be firstly determined. If the first phase between the left channel signal and the right channel signal of the current frame lies in the first interval, the current frame of the stereo audio signal is determined as the near out-of-phase signal, the current frame of the stereo audio signal is decorrelated by using the first decorrelation processing method to obtain the two decorrelation processed channel signals, and the second phase between the two decorrelation processed channel signals is calculated. In response to the first phase being less than or equal to the second phase, it is indicated that the first decorrelation processing method does not achieve the purpose of decorrelation. Then the current frame of the stereo audio signal is directly determined as the two decorrelation processed channel signals, the flag bit is determined to be the third value, the coded stream is obtained based on the two decorrelation processed channel signals, and the flag bit is written into the coded stream to be transmitted to the decoding device. The first interval may be [135°, 180°].

In summary, in the stereo audio signal processing method provided in embodiments of the present disclosure, the first cross-correlation coefficient for the left channel signal and the right channel signal of the current frame of the stereo audio signal is firstly determined. When the first cross-correlation coefficient is less than the first threshold, the first decorrelation processing method is used to perform decorrelation processing on the current frame of the stereo audio signal in order to obtain the two decorrelation processed channel signals. And thereafter, the second cross-correlation coefficient for the two decorrelation processed channel signals is calculated. In response to the first cross-correlation coefficient being less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide the way of determining the near out-of-phase signal and the corresponding decorrelation processing method, which greatly improves the coding compression ratio of the near out-of-phase signal.

FIG. 3c is a flow chart of a stereo audio signal processing method provided by embodiments of the present disclosure which is performed by the coding device. As shown in FIG. 3c, the stereo audio signal processing method includes the following steps.

Step 301c, the first cross-correlation coefficient for the left channel signal and the right channel signal of the current frame of the stereo audio signal is determined.

A related description of step 301c can be found in the description of above the embodiments, and the embodiments of the present disclosure will not repeat the related description herein.

Step 302c, in response to the first cross-correlation coefficient being greater than the second threshold, the second decorrelation processing method is used to decorrelate the current frame of the stereo audio signal to obtain the two decorrelation processed channel signals, the third cross-correlation coefficient for the two decorrelation processed channel signals is calculated, and in response to the first cross-correlation coefficient being less than or equal to the third cross-correlation coefficient, the current frame of the stereo audio signal is directly determined as the two decorrelation processed channel signals, the flag bit is determined as the third value, and the coded stream is obtained based on the two decorrelation processed channel signals and the flag bit is written into the coded stream.

A related detailed description of the second threshold, the second decorrelation processing method, the first cross-correlation coefficient and the third cross-correlation coefficient can be referred to the above-described embodiments, and the embodiments of the present disclosure will not repeat the related detailed description herein.

Also, in an embodiment of the present disclosure, in response to the first cross-correlation coefficient being greater than the second threshold and less than or equal to the third cross-correlation coefficient, it is determined that the first decorrelation processing method does not achieve the purpose of decorrelation.

Specifically, with reference to the foregoing, it can be seen that in response to the first cross-correlation coefficient being greater than the second threshold, it is indicated that the current frame of the stereo audio signal is the near in-phase signal (i.e., the greater the correlation coefficient, the higher the positive correlation). If the first cross-correlation coefficient (i.e., the cross-correlation coefficient before the decorrelation processing) is less than or equal to the third cross-correlation coefficient (i.e., the cross-correlation coefficient after the decorrelation processing), it is indicated that the positive correlation of the two channels of the audio signal before the second decorrelation processing is lower than or equal to the positive correlation of the two-channel signal after the second decorrelation processing. Thus, it can be determined that the second decorrelation processing method does not achieve the purpose of decorrelation.

Based on this, in an embodiment of the present disclosure, in response to determining that the second decorrelation processing method does not achieve the purpose of decorrelation, the coding compression ratio will be greatly reduced if coding is continued based on the decorrelated processed two-channel signal obtained by the second decorrelation processing method. Therefore, in the present disclosure, the current frame of the stereo audio signal can be directly determined as the two decorrelation processed channel signals, the flag bit can be determined to be the third value (e.g., 2), the coded stream can be obtained based on the two decorrelation processed channel signals, and the flag bit can be written into the coded stream to be transmitted to the decoding device. A related description of this part can be referred to the preceding embodiments, and the embodiments of the present disclosure will not repeat the related description herein.

It should also be noted that the above contents of the present embodiment describe processing the stereo audio signal based on the cross-correlation between the left channel signal and the right channel signal of the current frame of the stereo audio signal. In another embodiment of the present disclosure, the stereo audio signal may also be processed based on the phase between the left channel signal and the right channel signal of the current frame of the stereo audio signal. Specifically, the first phase between the left channel signal and the right channel signal of the current frame may be firstly determined. If the first phase between the left channel signal and the right channel signal of the current frame lies in the second interval, the current frame of the stereo audio signal is determined as the near in-phase signal, the current frame of the stereo audio signal is decorrelated by using the second decorrelation processing method to obtain the two decorrelation processed channel signals, and the third phase between the two decorrelation processed channel signals is calculated. In response to the first phase being less than or equal to the third phase, it is indicated that the second decorrelation processing method does not achieve the purpose of decorrelation. Then the current frame of the stereo audio signal is directly determined as the two decorrelation processed channel signals, the flag bit is determined to be the third value, the coded stream is obtained based on the two decorrelation processed channel signals, and the flag bit is written into the coded stream to be transmitted to the decoding device. The first interval may be [0°, 45°].

In summary, in the stereo audio signal processing method provided in embodiments of the present disclosure, the first cross-correlation coefficient for the left channel signal and the right channel signal of the current frame of the stereo audio signal is firstly determined. When the first cross-correlation coefficient is less than the first threshold, the first decorrelation processing method is used to perform decorrelation processing on the current frame of the stereo audio signal in order to obtain the two decorrelation processed channel signals. And thereafter, the second cross-correlation coefficient for the two decorrelation processed channel signals is calculated. In response to the first cross-correlation coefficient being less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide the way of determining the near out-of-phase signal and the corresponding decorrelation processing method, which greatly improves the coding compression ratio of the near out-of-phase signal.

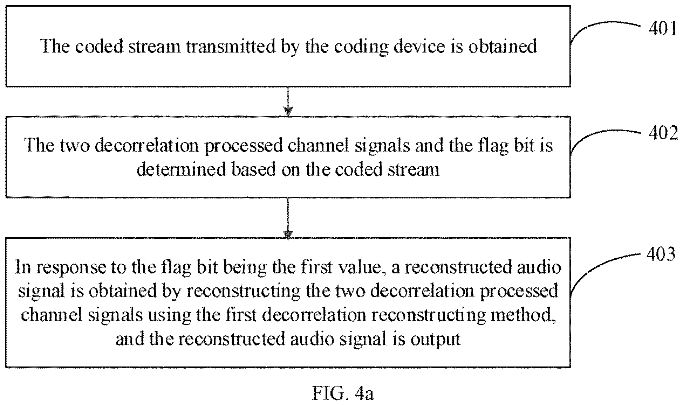

FIG. 4a is a schematic flow chart of a stereo audio signal processing method provided by embodiments of the present disclosure which is performed by the decoding device. As shown in FIG. 4a, the stereo audio signal processing method includes the following steps.

Step 401: the coded stream transmitted by the coding device is obtained.

Step 402, the two decorrelation processed channel signals and the flag bit is determined based on the coded stream.

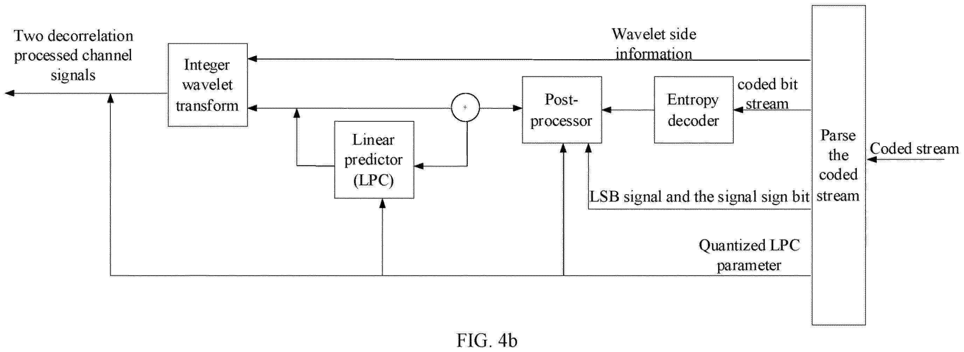

FIG. 4b is a block diagram of a process for determining two decorrelation processed channel signals based on a coded stream provided by embodiments of the present disclosure. As shown in FIG. 4b, the method for determining the two decorrelation processed channel signals based on the coded stream is as follows.

After obtaining the coded stream, the coded stream is firstly parsed to obtain the coded bit stream, the flag bit, the LSB signal, the signal sign bit, the quantized LPC parameters, and the wavelet side information, the coded stream is entropy decoded by using an entropy decoder to obtain a decoded signal, and then the decoded signal is processed by a post-processor based on the LSB signal and the signal sign bit to generate the predicted residual. After that, the predicted residual is reconstructed by using the linear predictor based on the quantized LPC parameters to generate the subband signals. And then the subband signals are reconstructed by using integer wavelet transform based on the wavelet side information to obtain the two decorrelation processed channel signals.

Step 403: in response to the flag bit being the first value, a reconstructed audio signal is obtained by reconstructing the two decorrelation processed channel signals using the first decorrelation reconstructing method, and the reconstructed audio signal is output.

In an embodiment of the present disclosure, in response to the flag bit being the first value (e.g., 0), it is indicated that the coding device uses the first decorrelation processing method to decorrelate the stereo audio signal. Based on this, the first decorrelation reconstructing method corresponding to the first decorrelation processing method may be used to reconstruct the two decorrelation processed channel signals to obtain the reconstructed audio signal, and the reconstructed audio signal is output.

In an embodiment of the present disclosure, the two decorrelation processed channel signals may include the primary channel signal and the secondary channel signal. Also, the first decorrelation reconstructing method may include: reconstructing the two decorrelation processed channel signals based on a formula V, where the formula V is:

$$\begin{cases} L(n) = Mid(n) + \dfrac{(Sid(n) + Sid(n)\&1)}{2} \\ R(n) = \dfrac{(Sid(n) - Sid(n)\&1)}{2} - Mid(n) \end{cases}$$

where the Mid(n) is the primary channel signal of the two decorrelation processed channel signals, the Sid(n) is the secondary channel signal of the two decorrelation processed channel signals, the L(n) is the left channel signal, and the $R(n)$ is the right channel signal.

In summary, in the stereo audio signal processing method provided in embodiments of the present disclosure, the first cross-correlation coefficient for the left channel signal and the right channel signal of the current frame of the stereo audio signal is firstly determined. When the first cross-correlation coefficient is less than the first threshold, the first decorrelation processing method is used to perform decorrelation processing on the current frame of the stereo audio signal to obtain the two decorrelation processed channel signals. And thereafter, the second cross-correlation coefficient for the two decorrelation processed channel signals is calculated. When the first cross-correlation coefficient is less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the coding compression ratio of the near out-of-phase signal.

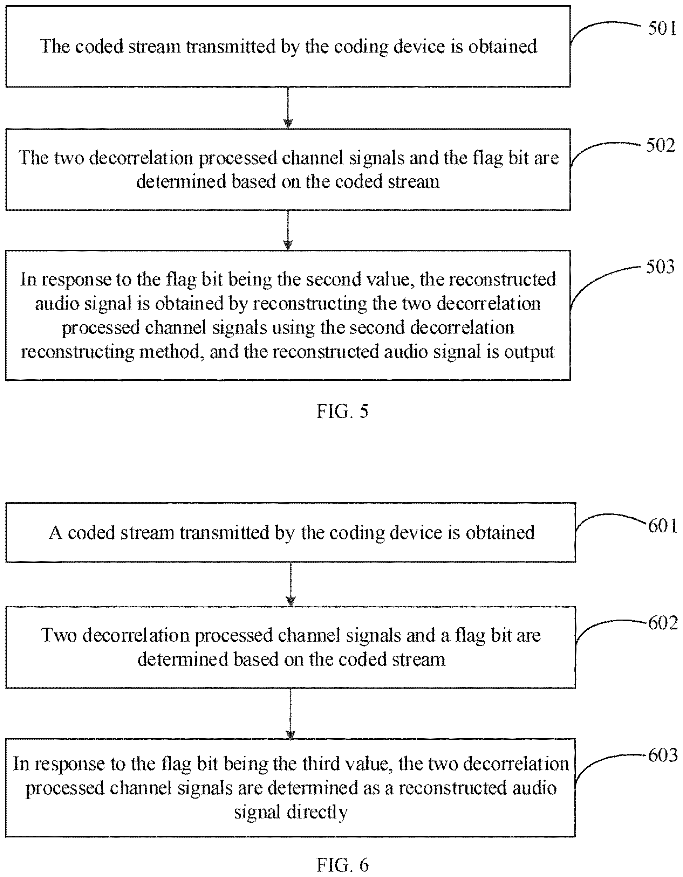

FIG. 5 is a schematic flow chart of a stereo audio signal processing method provided by embodiments of the present disclosure which is performed by the decoding device. As shown in FIG. 5, the stereo audio signal processing method includes the following steps.

Step 501: the coded stream transmitted by the coding device is obtained.

Step 502: the two decorrelation processed channel signals and the flag bit are determined based on the coded stream.

A related description of steps 501 to 502 can be found in the description of above the embodiments, and the embodiments of the present disclosure will not repeat the related description herein.

Step 503: in response to the flag bit being the second value, a reconstructed audio signal is obtained by reconstructing the two decorrelation processed channel signals using the second decorrelation reconstructing method, and the reconstructed audio signal is output.

In an embodiment of the present disclosure, in response to the flag bit being the second value (e.g., it may be 1), it is indicated that the coding device is using the second decorrelation processing method to decorrelate the stereo audio signal. Based on this, the second decorrelation reconstructing method corresponding to the second decorrelation processing method may be used to reconstruct the two decorrelation processed channel signals to obtain a reconstructed audio signal and the reconstructed audio signal is output.

In an embodiment of the present disclosure, the two decorrelation processed channel signals may include the primary channel signal and the secondary channel signal. Also, the second decorrelation reconstructing method may include: reconstructing the two decorrelation processed channel signals based on a formula VI, where the formula VI is:

$$
\begin{cases}
L(n) = Mid(n) + \dfrac{(Sid(n) + Sid(n)\&1)}{2} \\
R(n) = Mid(n) - \dfrac{(Sid(n) - Sid(n)\&1)}{2}
\end{cases}
$$

where the Mid(n) is the primary channel signal of the two decorrelation processed channel signals, the Sid(n) is the secondary channel signal of the two decorrelation processed channel signals, the $L(n)$ is the left channel signal, and the $R(n)$ is the right channel signal.

In summary, in the stereo audio signal processing method provided in embodiments of the present disclosure, the first cross-correlation coefficient for the left channel signal and the right channel signal of the current frame of the stereo audio signal is firstly determined. When the first cross-correlation coefficient is less than the first threshold, the first decorrelation processing method is used to perform decorrelation processing on the current frame of the stereo audio signal in order to obtain the two decorrelation processed channel signals. And thereafter, a second cross-correlation coefficient for the two decorrelation processed channel signals is calculated. In response to the first cross-correlation coefficient is less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the coding compression ratio of the near out-of-phase signal.

FIG. 6 is a schematic flow chart of a stereo audio signal processing method provided by embodiments of the present disclosure which is performed by the decoding device. As shown in FIG. 6, the stereo audio signal processing method includes the following steps.

Step 601: a coded stream transmitted by the coding device is obtained.

Step 602, two decorrelation processed channel signals and a flag bit are determined based on the coded stream.

A related description of steps 601 to 602 can be found in the description of the above embodiments, and the embodiments of the present disclosure will not repeat the related description herein.

Step 603, in response to the flag bit being the third value, the two decorrelation processed channel signals are determined as a reconstructed audio signal directly.

In an embodiment of the present disclosure, in response to the flag bit being the third value (e.g., 2), it is indicated that the coding device does not perform the decorrelation process. Based on this, the two decorrelation processed channel signals can be directly determined as the reconstructed audio signal.

In summary, in the stereo audio signal processing method provided in embodiments of the present disclosure, the first cross-correlation coefficient for the left channel signal and the right channel signal of the current frame of the stereo audio signal is firstly determined. When the first cross-correlation coefficient is less than the first threshold, the first decorrelation processing method is used to perform decorrelation processing on the current frame of the stereo audio signal in order to obtain the two decorrelation processed channel signals. And thereafter, a second cross-correlation coefficient for the two decorrelation processed channel signals is calculated. In response to the first cross-correlation coefficient is less than the second cross-correlation coefficient, the flag bit is determined to be the first value, the coded stream is obtained based on the two decorrelation processed channel signals, and the flag bit is written into the coded stream to be transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the coding compression ratio of the near out-of-phase signal.

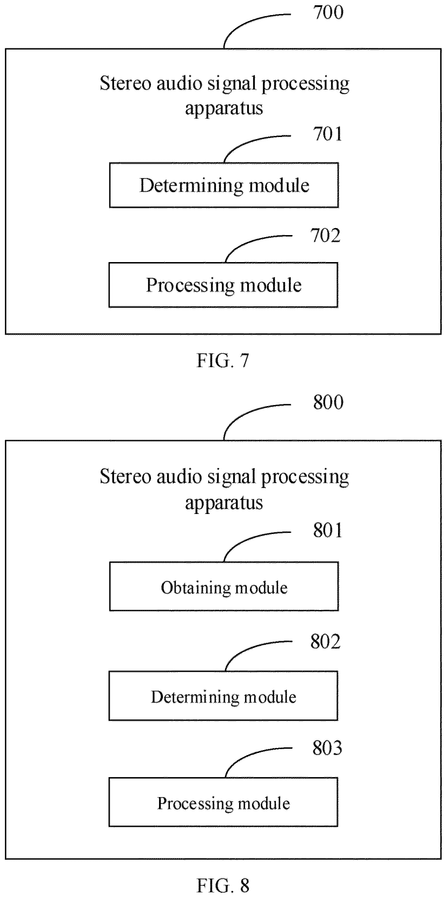

FIG. 7 is a schematic structure diagram of a stereo audio signal processing apparatus provided by embodiments of the present disclosure which is performed by the coding side. As shown in FIG. 7, the apparatus 700 may include:

a determining module 701, for determining a first cross-correlation coefficient for a left channel signal and a right channel signal of a current frame of a stereo audio signal; and
a processing module 702, for, in response to the first cross-correlation coefficient being less than a first threshold, using a first decorrelation processing method to decorrelate the current frame of the stereo audio signal to obtain two decorrelation processed channel signals, calculating a second cross-correlation coefficient for the two decorrelation processed channel signals, and in response to the first cross-correlation coefficient being less than the second cross-correlation coefficient, determining a flag bit to be a first value, obtaining a coded stream based on the two decorrelation processed channel signals, and writing the flag bit into the coded stream, wherein a value of the first threshold value is in a range of (-1, 0).

In summary, in the stereo audio signal processing method provided in embodiments of the present disclosure, the first cross-correlation coefficient for the left channel signal and the right channel signal of the current frame of the stereo audio signal is firstly determined. In response to the first cross-correlation coefficient being less than the first threshold, the first decorrelation processing method is used to perform decorrelation processing on the current frame of the stereo audio signal in order to obtain the two decorrelation processed channel signals. And thereafter, a second cross-correlation coefficient for the two decorrelation processed channel signals is calculated. In response to the first cross-correlation coefficient is less than the second cross-correlation coefficient, the flag bit is determined to be the first value, the coded stream is obtained based on the two decorrelation processed channel signals, and the flag bit is written into the coded stream and transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the compression ratio of the near out-of-phase signal.

In an example, in an embodiment of the present disclosure, the first decorrelation processing method includes a first Mid/Side down-mixing processing.

In an example, in an embodiment of the present disclosure, the first Mid/Side down-mixing processing includes: processing the left channel signal and the right channel signal to obtain a primary channel signal and a secondary channel signal based on a formula I , where the formula I is:

$$\begin{cases} \mathrm{Mid(n)} = \dfrac{(L(n) - R(n))}{2} \\ \mathrm{Sid(n)} = L(n) + R(n) \end{cases}$$

where the Mid(n) is the primary channel signal, the Sid(n) is the secondary channel signal, the L(n) is the left channel signal, and the $R(n)$ is the right channel signal.

In an example, in an embodiment of the present disclosure, the apparatus is further for:
in response to the first cross-correlation coefficient being greater than a second threshold, using a second decorrelation processing method to decorrelate the current frame of the stereo audio signal to obtain two decorrelation processed channel signals, calculating a third cross-correlation coefficient for the two decorrelation processed channel signals, and in response to the first cross-correlation coefficient being greater than the third cross-correlation coefficient, determining a flag bit to be a second value, obtaining a coded stream based on the two decorrelation processed channel signals, and writing the flag bit into the coded stream, where a value of the second threshold is in a range of (0, 1).

In an example, in an embodiment of the present disclosure, the second decorrelation processing method includes a second Mid/Side down-mixing processing.

In an example, in an embodiment of the present disclosure, the second Mid/Side down-mixing processing includes:

processing the left channel signal and the right channel signal to obtain a primary channel signal based on a formula II, where the formula II is:

$$\begin{cases} \mathrm{Mid(n)} = \dfrac{(L(n) + R(n))}{2} \\ \mathrm{Sid(n)} = L(n) - R(n) \end{cases}$$

where the Mid(n) is a primary channel signal, the Sid(n) is a secondary channel signal, the $L(n)$ is the left channel signal, and the $R(n)$ is the right channel signal.

In an example, in an embodiment of the present disclosure, the apparatus is further for:

in response to the first cross-correlation coefficient being greater than or equal to the first threshold and less than or equal to the second threshold, or the first cross-correlation coefficient being less than the first threshold and the first cross-correlation coefficient being greater than or equal to the second cross-correlation coefficient, or the first cross-correlation coefficient being greater than the second threshold and the first cross-correlation coefficient being less than or equal to the third cross-correlation coefficient, directly determining the current frame of the stereo audio signal to be two decorrelation processed channel signals, determining a flag bit to be a third value, and obtaining a coded stream based on the two decorrelation processed channel signals, and writing the flag bit into the coded stream.

In an example, in an embodiment of the present disclosure, the determining module is further for:

determining the first cross-correlation coefficient for the left channel signal and the right channel signal based on a formula III, where the formula III is:

$$\begin{cases} \eta_{(LR)} = \dfrac{\sum_{n=1}^{N}(L(n) - \bar{L}) \times (R(n) - \bar{R})}{\sqrt{\sum_{n=1}^{N}(L(n) - \bar{L})^2} \times \sqrt{\sum_{n=1}^{N}(R(n) - \bar{R})^2}} \\ \bar{L} = \dfrac{\sum_{n=1}^{N} L(n)}{N} \\ \bar{R} = \dfrac{\sum_{n=1}^{N} R(n)}{N} \end{cases}$$

wherein the $\eta_{(LR)}$ is the cross-correlation coefficient for the left channel signal and the right channel signal of the current frame, the L(n) is a $n^{th}$ sample point of the left channel signal of the current frame, the $\bar{L}$ is an average of all sample points of the left channel signal of the current frame, the R(n) is a $n^{th}$ sample point of the right channel signal of the current frame, the $\bar{R}$ is an average of all sample points of the right channel signal of the current frame, the N is a total number of sample points of the left channel signal or the right channel signal of the current frame, i.e., a length of the current frame.

In an example, in an embodiment of the present disclosure, the two decorrelation processed channel signals include a primary channel signal and a secondary channel signal;

the apparatus is further for:
determining the second cross-correlation coefficient and the third cross-correlation coefficient based on a formula IV, where the formula IV is:

$$\left\{ \begin{array}{l} \eta_{(MS)} = \dfrac{\sum_{n=1}^{N}\left(Mid(n) - \overline{Mid}\right) \times \left(Sid(n) - \overline{Sid}\right)}{\sqrt{\sum_{n=1}^{N}\left(Mid(n) - \overline{Mid}\right)^2} \times \sqrt{\sum_{n=1}^{N}\left(Sid(n) - \overline{Sid}\right)^2}} \\[4mm] \overline{Mid} = \dfrac{\sum_{n=1}^{N} Mid(n)}{N} \\[4mm] \overline{Sid} = \dfrac{\sum_{n=1}^{N} Sid(n)}{N} \end{array} \right.$$

wherein the $\eta_{(MS)}$ is the second cross-correlation coefficient or the third cross-correlation coefficient, the Mid(n) is a $n^{th}$ sample point of the primary channel signal of the two decorrelation processed channel signals, the $\overline{Mid}$ is an average of all sample points of the primary channel signal of the two decorrelation processed channel signals, the Sid(n) is a $n^{th}$ sample point of the secondary channel signal of the two decorrelation processed channel signals, the $\overline{Sid}$ is an average of all sample points of the secondary channel signal of the two decorrelation processed channel signals, and the N is a total number of sample points of the left channel signal or the right channel signal of the current frame, i.e., a length of the current frame.

In summary, in the stereo audio signal processing method provided in embodiments of the present disclosure, the first cross-correlation coefficient for the left channel signal and the right channel signal of the current frame of the stereo audio signal is firstly determined. In response to the first cross-correlation coefficient being less than the first threshold, the first decorrelation processing method is used to perform decorrelation processing on the current frame of the stereo audio signal in order to obtain the two decorrelation processed channel signals. And thereafter, a second cross-correlation coefficient for the two decorrelation processed channel signals is calculated. In response to the first cross-correlation coefficient is less than the second cross-correlation coefficient, the flag bit is determined to be the first value, the coded stream is obtained based on the two decorrelation processed channel signals, and the flag bit is written into the coded stream and transmitted to the decoding device. In the embodiments of the present disclosure, the value of the first threshold is in the range of (-1, 0). Thereby when the first cross-correlation coefficient is less than the first threshold, it is indicated that the current frame of the stereo audio signal is the near out-of-phase signal for which the first decorrelation processing method will be adopted to ensure the subsequent compression ratio. The embodiments of the present disclosure provide a way of determining the near out-of-phase signal and the corresponding decorrelation processing method, which greatly improves the compression ratio of the near out-of-phase signal.

FIG. 8 is a schematic structure diagram of a stereo audio signal processing apparatus provided by embodiments of the present disclosure which is performed by a decoding end. As shown in FIG. 8, the apparatus 800 may include:

an obtaining module 801, for obtaining a coded stream transmitted by a coding device;
a determining module 802, for determining two decorrelation processed channel signals and a flag bit based on the coded stream; and
a processing module 803, for, in response to the flag bit being a first value, obtaining a reconstructed audio signal by reconstructing the two decorrelation processed channel signals using a first decorrelation reconstructing method and outputting the reconstructed audio signal.

In an example, in an embodiment of the present disclosure, the first decorrelation reconstructing method includes:

reconstructing the two decorrelation processed channel signals based on a formula V, where the formula V is:

$$\left\{ \begin{array}{l} L(n) = Mid(n) + \dfrac{(Sid(n) + Sid(n)\&1)}{2} \\[4mm] R(n) = \dfrac{(Sid(n) - Sid(n)\&1)}{2} - Mid(n) \end{array} \right.$$

wherein the Mid(n) is a primary channel signal of the two decorrelation processed channel signals, the Sid(n) is a secondary channel signal of the two decorrelation processed channel signals, the $L(n)$ is a left channel signal, and the $R(n)$ is a right channel signal.

In an example, in an embodiment of the present disclosure, the apparatus is further for:
in response to the flag bit being a second value, obtaining a reconstructed audio signal by reconstructing the two decorrelation processed channel signals using a second decorrelation reconstructing method, and outputting the reconstructed audio signal.

In an example, in an embodiment of the present disclosure, the second decorrelation reconstructing method includes:

reconstructing the two decorrelation processed channel signals based on a formula VI, where the formula VI is:

$$\begin{cases} L(n) = Mid(n) + \dfrac{(Sid(n) + Sid(n)\&1)}{2} \\ R(n) = Mid(n) - \dfrac{(Sid(n) - Sid(n)\&1)}{2} \end{cases}$$

where the Mid(n) is a primary channel signal of the two decorrelation processed channel signals, the Sid(n) is a secondary channel signal of the two decorrelation processed channel signals, the $L(n)$ is a left channel signal, and the $R(n)$ is a right channel signal.

In an example, in an embodiment of the present disclosure, the apparatus is further for:
in response to the flag bit being a third value, determining the two decorrelation processed channel signals as a reconstructed audio signal directly.

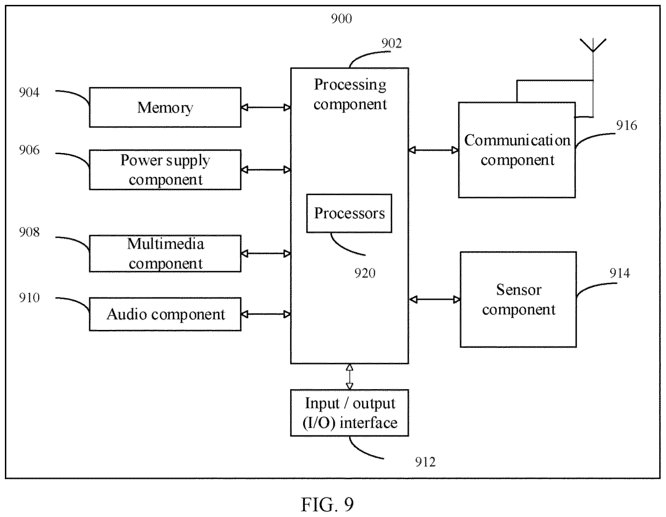

FIG. 9 is a block diagram of a user equipment (UE) 900 provided by an embodiment of the present disclosure. For example, the UE 900 may be a mobile phone, a computer, a digital broadcast terminal, a message transceiving device, a game console, a tablet device, a medical device, a fitness device and a personal digital assistant and so on.

As shown in FIG. 9, the UE 900 may include one or more of the following components: a processing component 902, a memory 904, a power supply component 906, a multimedia component 908, an audio component 910, an input/output (I/O) interface 912, a sensor component 913, and a communication component 916.

The processing component 902 generally controls the overall operations of the UE 900, such as operations associated with display, calling, data communication, camera operation and recording operation. The processing component 902 may include one or more processors 920 to execute instructions to complete all or a part of the blocks of the above methods. Further, the processing component 902 may include one or more modules to facilitate interaction between the processing component 902 and another component. For example, the processing component 902 may include a multimedia module to facilitate the interaction between the multimedia component 908 and the processing component 902.

The memory 904 is configured to store different types of data to support the operations of the UE 900. Examples of such data include instructions, contact data, phonebook data, messages, pictures, videos, and so on for any application or method that operates on the UE 900. The memory 904 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only Memory (ROM), a magnetic memory, a flash memory, a disk or a CD.

The power supply component 906 provides power for different components of the UE 900. The power supply component 906 may include a power management system, one or more power sources, and other components associated with generating, managing and distributing power for the UE 900.

The multimedia component 908 may include a screen for providing an output interface between the UE 900 and a user. In some examples, the screen may include a liquid crystal display (LCD) and a touch panel (TP). If the screen includes a touch panel, the screen may be implemented as a touch screen for receiving an input signal from a user. The touch panel may include one or more touch sensors for sensing a touch, a slide and a gesture on the touch panel. The touch sensor may not only sense a boundary of a touching or sliding movement, but also detect wake-up duration and pressure related to the touching or sliding operation. In some examples, the multimedia component 908 may include a front camera and / or a rear camera. When the UE 900 is in an operation mode, such as a shooting mode or a video mode, the front camera and / or the rear camera may receive external multimedia data. Each of the front camera and the rear camera may be a fixed optical lens system or be of a focal length and a capability of an optical zoom.

The audio component 910 is configured to output and/or input an audio signal. For example, the audio component 910 may include a microphone (MIC). When the UE 900 is in an operating mode, such as a call mode, a recording mode and a speech recognition mode, the microphone is configured to receive an external audio signal. The received audio signal may be further stored in the memory 904 or sent via the communication component 916. In some examples, the audio component 910 also includes a speaker for outputting an audio signal.

The I/O interface 912 may provide an interface between the processing component 902 and peripheral interface modules. The above peripheral interface modules may include a keyboard, a click wheel, buttons and so on. These buttons may include but not limited to, a home button, a volume button, a start button and a lock button.

The sensor component 913 includes one or more sensors for providing state assessments in different aspects for the UE 900. For example, the sensor component 913 may detect an on/off state of the UE 900 and a relative location of components. For example, the components are a display and a keypad of the UE 900. The sensor component 913 may also detect a position change of the UE 900 or a component of the UE 900, presence or absence of a touch of a user on the UE 900, an orientation or acceleration/deceleration of the UE 900, and a temperature change of UE 900. The sensor component 913 may include a proximity sensor for detecting the existence of a nearby object without any physical touch. The sensor component 913 may also include an optical sensor, such as a CMOS or CCD image sensor used in an imaging application. In some examples, the sensor component 913 may also include an acceleration sensor, a gyro sensor, a magnetic sensor, a pressure sensor, or a temperature sensor.

The communication component 916 is configured to facilitate wired or wireless communication between the UE 900 and other devices. The UE 900 may access a wireless network based on a communication standard, such as WiFi, 2G or 3G, or a combination thereof. In an example, the communication component 916 the communication component 916 may receive a broadcast signal or broadcast-related information from an external broadcast management system via a broadcast channel. In an example, the communication component 916 may also include a near field communication (NFC) module to facilitate short-range communications. For example, the NFC module may be implemented based on radio frequency identity (RFID) technology, infrared data association (IrDA) technology, ultra-wideband (UWB) technology, bluetooth (BT) technology and other technologies.

In an example, the UE 1200 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic elements, for executing the method in any one of the above examples.

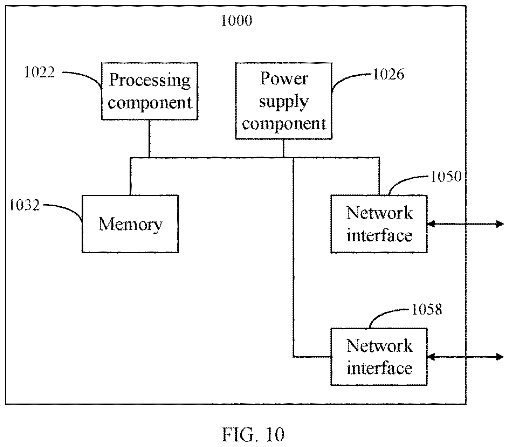

FIG. 10 is a block diagram of a network side device 1000 provided by an embodiment of the present disclosure. For example, the network side device 1000 may be provided as a network-side device. Referring to FIG. 10, the network-side device 1000 includes a processing component 1011, which further includes at least one processor, and a memory resource represented by a memory 1032 for storing instructions, such as applications, executed by a processing component 1022. The application program stored in the memory 1032 may include one or more modules, and each module corresponds to a set of instructions respectively. In addition, the processing component 1010 is configured to execute instructions to perform any of the methods described in the foregoing method performed by the network-side device, e.g., the method shown in FIG. 1.

The network-side device 1000 may also include a power supply component 1026 configured to perform power management of the network-side device 1000, a wired/wireless network interface 1050 configured to connect the network-side device 1000 to a network, and an input/output (I/O) interface 1058. The network-side device 1000 may operate based on an operating system, such as Windows ServerTM, Mac OS XTM, UnixTM, LinuxTM, FreeBSDTM or the like, stored in the memory 1032.

In the above-described embodiments provided in the present disclosure, the methods provided in the embodiments of the present disclosure are described from the perspectives of the network-side device, and the UE, respectively. In order to realize each of the functions in the method provided by the above embodiments of the present disclosure, the network-side device and the UE may include a hardware structure and a software module, and realize each of the above functions in the form of the hardware structure, a software module, or a hardware structure plus a software module. A function of each of the above-described functions may be performed in the form of a hardware structure, a software module, or a hardware structure plus a software module.

In the above-described embodiments provided in the present disclosure, the methods provided in the embodiments of the present disclosure are described from the perspectives of the network-side device, and the UE, respectively. In order to realize each of the functions in the method provided by the above embodiments of the present disclosure, the network-side device and the UE may include a hardware structure and a software module, and realize each of the above functions in the form of a hardware structure, a software module, or a hardware structure plus a software module. A function of each of the above-described functions may be performed in the form of a hardware structure, a software module, or a hardware structure plus a software module.

Embodiments of the present disclosure provide a communication device. The communication device may include a transceiving module and a processing module. The transceiving module may include a transmitting module and/or a receiving module, the transmitting module for realizing a transmitting function, and the receiving module for realizing a receiving function, and the transceiving module may realize the transmitting and/or the receiving function.

The communication device may be a terminal device (such as the terminal device in the preceding method embodiment), a device in the terminal device, or a device capable of being matched for use with the terminal device. In an example, the communication device may be a network device, or a device in a network device, or a device capable of being matched for use with a network device.

Another communication device is provided by embodiments of the present disclosure. The communication device may be a network device, a terminal device (such as the terminal device in the foregoing method embodiments), a chip, a chip system, or a processor, etc., that supports the network device to implement the above-described method, or a chip, a chip system, or a processor, etc., that supports the terminal device to realize the above-described method. The device may be used to realize the method described in the foregoing method embodiments, as may be described in the foregoing method embodiments.

The communication device may include one or more processors. The processors may be general processors or specialized processors, etc. For example, the processors may be baseband processors or central processors. The baseband processors may be used for processing communication protocols as well as communication data, and the central processors may be used for controlling the communication device (e.g., network-side device, baseband chip, terminal device, terminal device chip, DU or CU, etc.), executing a computer program, and processing data from the computer program.

In an example, the communication device may further include one or more memories on which a computer program may be stored, the processor executing the computer program to cause the communication device to perform the method described in the above method embodiment. In an example, data may also be stored in the memory. The communication device and the memory may be provided separately or may be integrated together.

In an example, the communication device may also include a transceiver and an antenna. The transceiver may be referred to as a transceiver unit, a transceiver, or a transceiver circuit, etc., and is used to implement the transceiving function. The transceiver may include a receiver and a transmitter, where the receiver may be referred to as a receiver or a receiving circuit, etc., for implementing the receiving function, and the transmitter may be referred to as a transmitter or a transmitting circuit, etc., for implementing the transmitting function.

In an example, one or more interface circuits may also be included in the communication device. The interface circuits are used to receive code instructions and transmit the code instructions to the processor. The processor runs the code instructions to cause the communication device to perform the method described in the method embodiment above.

The communication device is a terminal device (such as the terminal device in the preceding method embodiment): the processor is used to perform the method shown in any one of FIGs. 1 to 4a.

The communication device is a network device: the transceiver is used to perform the method shown in any of FIGs. 5 to 7.

In one implementation, transceivers for receiving and transmitting may be included in the processor. The transceivers may be, for example, transceiver circuits, interfaces, or interface circuits. The transceiver circuits, interfaces, or interface circuits for receiving and transmitting may be separate or may be integrated together. The transceiver circuits, interfaces, or interface circuits described above may be used for code/data reading and writing, or, the transceiver circuits, interfaces, or interface circuits described above may be used for signal transmission or delivery.

In one implementation, the processor may store a computer program which runs on the processor to cause the communication device to perform the methods described in the method embodiments above. The computer program may be solidified in the processor, in which case the processor may be implemented by hardware.

In one implementation, the communication device may include circuitry, and the circuitry may implement the functions of sending, receiving or communicating in the preceding method embodiments. The processors and transceivers described in this disclosure may be implemented on integrated circuits (ICs), analog ICs, radio frequency integrated circuits RFICs, mixed signal ICs, application specific integrated circuits (ASICs), printed circuit boards (PCBs), electronic equipment, etc. The processors and transceivers may also be manufactured by using various materials processed by IC technologies such as a complementary metal oxide semiconductor (CMOS), nMetal-oxidesemiconductor (NMOS), positive channel metal oxide semiconductor, (PMOS), bipolar junction transistor (BJT), bipolar CMOS (BiCMOS), silicon-germanium (SiGe), gallium arsenide (Gas) and so on.

The communication device in the above description of embodiments may be a network device or a terminal device (such as the terminal device in the previous method embodiments), but the scope of the communication device described in this disclosure is not limited thereto, and the structure of the communication device may not be limited thereto. The communication device may be a stand-alone device or may be part of a larger device. For example the described communication device may be:

(1) a stand-alone integrated circuit IC or chip, or, a system on chip or subsystem on chip;
(2) a collection of one or more ICs, in an example, the collection of ICs may also include storage components for storing data and computer programs;

(3) an ASIC, such as a modem;

(4) a module that can be embedded in other equipment;

(5) a receiver, terminal device, intelligent terminal device, cellular phone, wireless device, handheld, mobile unit, on-vehicle device, network device, cloud device, artificial intelligence device, or the like;

(6) others, etc.

For the case where the communication device may be a chip or a system-on-a-chip, the chip includes processor(s) and interfaces. The number of the processor(s) may be one or more and the number of the interfaces may be more than one.

In an example, the chip further includes a memory, the memory being used to store necessary computer programs and data.

Those skilled in the art may also appreciate that the various illustrative logical blocks and steps set forth in embodiments of the present disclosure may be implemented by electronic hardware, computer software, or a combination of both. Whether such functions are implemented by hardware or software depends on the particular application and the design requirements of the overall system. Those skilled in the art, for each particular application, may use various methods to implement the described functions, but such implementations should not be construed as being outside the scope of protection of the embodiments of the present disclosure.

Embodiments of the present disclosure also provide a system for determining a side link duration, including a communication device as a terminal device (such as the first terminal device in the preceding method embodiment) and a communication device as a network device in the preceding embodiment, or, including a communication device as a terminal device (such as the first terminal device in the preceding method embodiment) and a communication device as a network device in the preceding embodiment.

The present disclosure also provides a readable storage medium having instructions stored thereon, the instructions when executed by a computer, implementing the functions of any of the method embodiments described above.

The present disclosure also provides a computer program product that, when executed by a computer, implements the functions of any of the method embodiments described above.

The above embodiments may be implemented in whole or in part by a software, hardware, firmware, or any combination thereof. When using a software to implement, the above embodiments may be implemented, in whole or in part, in a form of a computer program product. The computer program product includes one or more computer programs. Loading and executing the computer program on a computer produces, in whole or in part, a process or function in accordance with embodiments of the present disclosure. The computer may be a general computer, a specialized computer, a computer network, or other programmable device. The computer program may be stored in a computer-readable storage medium or transmitted from one computer-readable storage medium to another computer-readable storage medium, e.g., the computer program may be transmitted from a web site, computer, server, or data center via a wired way (e.g., coaxial cable, fiber optic, digital subscriber line (DSL)) or wireless way (e.g., infrared, radio, microwave, etc.) to another website site, computer, server, or data center. The computer-readable storage medium may be any usable medium to which a computer can access or a data storage device such as a server, data center, etc. integrated by one or more usable media. The usable medium may be a magnetic medium (e.g., floppy disk, hard disk, tape), an optical medium (e.g., a high-density digital video disc (DVD)), a semiconductor medium (e.g., a solid state disk (SSD)) or the like.

A person of ordinary skill in the art may understand that the first, second, and other various numerical numbers involved in the present disclosure are only described for the convenience of differentiation, and are not used to limit the scope of the embodiments of the present disclosure or indicate an order of precedence.

The at least one of the present disclosure may also be described as one or more, and the plurality may be two, three, four, or more, without limitation of the present disclosure. In embodiments of the present disclosure, for a kind of technical features, a technical feature is described by "first", "second", "third", "A ", "B", "C", and "D", etc., to distinguish the technical features in the kind of technical features, and the technical features described by the "first", "second", "third", "A", "B", "C" and "D" have no order of priority or size thereof.

Other implementations of the present disclosure will be apparent to those skilled in the art from consideration of the specification and practice of the present disclosure herein. The present disclosure is intended to cover any variations, uses, modification or adaptations of the present disclosure that follow the general principles thereof and include common knowledge or conventional technical means in the art that are not disclosed in the present disclosure. The specification and examples herein are intended to be illustrative only and the real scope and spirit of the present disclosure are indicated by the following claims of the present disclosure.

It is to be understood that the present disclosure is not limited to the precise structures described above and shown in the accompanying drawings and may be modified or changed without departing from the scope of the present disclosure. The scope of the disclosure is to be limited only by the appended claims.

**Claims**

1. A stereo audio signal processing method, performed by a coding device, comprising:

   determining a first cross-correlation coefficient for a left channel signal and a right channel signal of a current frame of a stereo audio signal; and
   in response to the first cross-correlation coefficient being less than a first threshold, obtaining two decorrelation processed channel signals by using a first decorrelation processing method to decorrelate the current frame of the stereo audio signal, calculating a second cross-correlation coefficient for the two decorrelation processed channel signals, and in response to the first cross-correlation coefficient being less than the second cross-correlation coefficient, determining a flag bit to be a first value, obtaining a coded stream based on the two decorrelation processed channel signals, and writing the flag bit into the coded stream, wherein a value of the first threshold is in a range of (-1, 0).

2. The stereo audio signal processing method of claim 1, wherein the first decorrelation processing method comprises a first Mid/Side down-mixing processing.

3. The stereo audio signal processing method of claim 2, wherein the first Mid/Side down-mixing processing comprises:

   processing the left channel signal and the right channel signal to obtain a primary channel signal and a secondary channel signal based on a formula I , wherein, the formula I is:

$$\begin{cases} \mathrm{Mid(n)} = \dfrac{(L(n) - R(n))}{2} \\ \mathrm{Sid(n)} = L(n) + R(n) \end{cases}$$

   wherein the Mid(n) is the primary channel signal, the Sid(n) is the secondary channel signal, the $L(n)$ is the left channel signal, and the $R(n)$ is the right channel signal.

4. The stereo audio signal processing method of claim 1, further comprising:
   in response to the first cross-correlation coefficient being greater than a second threshold, obtaining two decorrelation processed channel signals by using a second decorrelation processing method to decorrelate the current frame of the stereo audio signal , calculating a third cross-correlation coefficient for the two decorrelation processed channel signals, and in response to the first cross-correlation coefficient being greater than the third cross-correlation coefficient, determining a flag bit to be a second value, obtaining a coded stream based on the two decorrelation processed channel signals, and writing the flag bit into the coded stream, wherein a value of the second threshold is in a range of (0, 1).

5. The stereo audio signal processing method of claim 4, wherein the second decorrelation processing method comprises a second Mid/Side down-mixing processing.

6. The stereo audio signal processing method of claim 5, wherein the second Mid/Side down-mixing processing comprises:

   processing the left channel signal and the right channel signal to obtain a primary channel signal based on a formula II, wherein the formula II is:

$$\begin{cases} \mathrm{Mid(n)} = \dfrac{(L(n) + R(n))}{2} \\ \mathrm{Sid(n)} = L(n) - R(n) \end{cases}$$

   wherein the Mid(n) is a primary channel signal, the Sid(n) is a secondary channel signal, the $L(n)$ is the left channel signal, and the $R(n)$ is the right channel signal.

7. The stereo audio signal processing method of claim 4, further comprising:
   in response to the first cross-correlation coefficient being greater than or equal to the first threshold and less than or equal to the second threshold, or the first cross-correlation coefficient being less than the first threshold and the first cross-correlation coefficient being greater than or equal to the second cross-correlation coefficient, or the first cross-correlation coefficient being greater than the second threshold and the first cross-correlation coefficient being less than or equal to the third cross-correlation coefficient, directly determining the current frame of the stereo audio signal to be two decorrelation processed channel signals, determining a flag bit to be a third value, and obtaining a coded stream based on the two decorrelation processed channel signals, and writing the flag bit into the coded stream.

8. The stereo audio signal processing method of claim 1, wherein determining the first cross-correlation coefficient for the left channel signal and the right channel signal of the current frame of the stereo audio signal comprises:

   determining the first cross-correlation coefficient for the left channel signal and the right channel signal based on a formula III, wherein the formula III is:

   $$\begin{cases} \eta_{(LR)} = \dfrac{\sum_{n=1}^{N}(L(n) - \bar{L}) \times (R(n) - \bar{R})}{\sqrt{\sum_{n=1}^{N}(L(n) - \bar{L})^2} \times \sqrt{\sum_{n=1}^{N}(R(n) - \bar{R})^2}} \\[2em] \bar{L} = \dfrac{\sum_{n=1}^{N} L(n)}{N} \\[1.5em] \bar{R} = \dfrac{\sum_{n=1}^{N} R(n)}{N} \end{cases}$$

   wherein the $\eta_{(LR)}$ is the cross-correlation coefficient for the left channel signal and the right channel signal of the current frame, the L(n) is a $n^{th}$ sample point of the left channel signal of the current frame, the $\bar{L}$ is an average of all sample points of the left channel signal of the current frame, the R(n) is a $n^{th}$ sample point of the right channel signal of the current frame, the $\bar{R}$ is an average of all sample points of the right channel signal of the current frame, the N is a total number of sample points of the left channel signal or the right channel signal of the current frame, i.e., a length of the current frame.

9. The stereo audio signal processing method of claim 4, wherein the two decorrelation processed channel signals comprises a primary channel signal and a secondary channel signal;
   calculating the second cross-correlation coefficient and the third cross-correlation coefficient for the two decorrelation processed channel signals, comprising:

   determining the second cross-correlation coefficient and the third cross-correlation coefficient based on a formula IV, wherein the formula IV is:

   $$\begin{cases} \eta_{(MS)} = \dfrac{\sum_{n=1}^{N}(Mid(n) - \overline{Mid}) \times (Sid(n) - \overline{Sid})}{\sqrt{\sum_{n=1}^{N}(Mid(n) - \overline{Mid})^2} \times \sqrt{\sum_{n=1}^{N}(Sid(n) - \overline{Sid})^2}} \\[2em] \overline{Mid} = \dfrac{\sum_{n=1}^{N} Mid(n)}{N} \\[1.5em] \overline{Sid} = \dfrac{\sum_{n=1}^{N} Sid(n)}{N} \end{cases}$$

   wherein the $\eta_{(MS)}$ is the second cross-correlation coefficient or the third cross-correlation coefficient, the Mid(n) is a $n^{th}$ sample point of the primary channel signal of the two decorrelation processed channel signals, the $\overline{Mid}$ is an average of all sample points of the primary channel signal of the two decorrelation processed channel signals, the Sid(n) is a $n^{th}$ sample point of the secondary channel signal of the two decorrelation processed channel signals, the $\overline{Sid}$ is an average of all sample points of the secondary channel signal of the two decorrelation processed channel signals, and the N is a total number of sample points of the left channel signal or the right channel signal of the current frame, i.e., a length of the current frame.

10. A stereo audio signal processing method, performed by a decoding device, comprising:

obtaining a coded stream transmitted by a coding device;
determining two decorrelation processed channel signals and a flag bit based on the coded stream; and
in response to the flag bit being a first value, obtaining a reconstructed audio signal by reconstructing the two decorrelation processed channel signals using a first decorrelation reconstructing method, and outputting the reconstructed audio signal.

11. The stereo audio signal processing method of claim 10, wherein the first decorrelation reconstructing method comprises:

reconstructing the two decorrelation processed channel signals based on a formula V, wherein, the formula V is:

$$\begin{cases} L(n) = Mid(n) + \dfrac{(Sid(n) + Sid(n)\&1)}{2} \\ R(n) = \dfrac{(Sid(n) - Sid(n)\&1)}{2} - Mid(n) \end{cases}$$

wherein the Mid(n) is a primary channel signal of the two decorrelation processed channel signals, the Sid(n) is a secondary channel signal of the two decorrelation processed channel signals, the $L(n)$ is a left channel signal, and the $R(n)$ is a right channel signal.

12. The stereo audio signal processing method of claim 10, further comprising:
in response to the flag bit being a second value, obtaining a reconstructed audio signal by reconstructing the two decorrelation processed channel signals using a second decorrelation reconstructing method, and outputting the reconstructed audio signal.

13. The stereo audio signal processing method of claim 12, wherein the second decorrelation reconstructing method comprises:

reconstructing the two decorrelation processed channel signals based on a formula VI, wherein, the formula VI is:

$$\begin{cases} L(n) = Mid(n) + \dfrac{(Sid(n) + Sid(n)\&1)}{2} \\ R(n) = Mid(n) - \dfrac{(Sid(n) - Sid(n)\&1)}{2} \end{cases}$$

wherein the Mid(n) is a primary channel signal of the two decorrelation processed channel signals, the Sid(n) is a secondary channel signal of the two decorrelation processed channel signals, the $L(n)$ is a left channel signal, and the $R(n)$ is a right channel signal.

14. The stereo audio signal processing method of claim 10, further comprising:
in response to the flag bit being a third value, determining the two decorrelation processed channel signals as a reconstructed audio signal directly.

15. A stereo audio signal processing apparatus, comprising:

a determining module, for determining a first cross-correlation coefficient for a left channel signal and a right channel signal of a current frame of a stereo audio signal; and
a processing module, for, in response to the first cross-correlation coefficient being less than a first threshold, obtaining two decorrelation processed channel signals by using a first decorrelation processing method to decorrelate the current frame of the stereo audio signal, calculating a second cross-correlation coefficient for the two decorrelation processed channel signals, and in response to the first cross-correlation coefficient being less than the second cross-correlation coefficient, determining a flag bit to be a first value, obtaining a coded stream based on the two decorrelation processed channel signals, and writing the flag bit into the coded stream, wherein a value of the first threshold is in a range of (-1, 0).

16. A stereo audio signal processing apparatus, comprising:

an obtaining module, for obtaining a coded stream transmitted by a coding device;
a determining module, for determining two decorrelation processed channel signals and a flag bit based on the coded stream; and
a processing module, for, in response to the flag bit being a first value, reconstructing the two decorrelation processed channel signals using a first decorrelation reconstructing method to obtain a reconstructed audio signal and outputting the reconstructed audio signal.

17. A communication apparatus, comprising a processor and a memory, the memory having a computer program stored therein, the processor executing the computer program stored in the memory to cause the communication apparatus to perform the method of any one of claims 1 to 9.

18. A communication apparatus, comprising a processor and a memory, the memory having a computer program stored therein, the processor executing the computer program stored in the memory to cause the communication apparatus to perform the method of any one of claims 10 to 14.

19. A communication apparatus, comprising: a processor and an interface circuit;

the interface circuit, for receiving code instructions and transmitting the code instructions to the processor; and
the processor, for running the code instructions to perform the method of any one of claims 1 to 9.

20. A communication apparatus, comprising: a processor and an interface circuit;

the interface circuit, for receiving code instructions and transmitting the code instructions to the processor; and
the processor, for running the code instructions to perform the method of any one of claims 10 to 14.

21. A computer-readable storage medium for storing instructions, in response to the instructions being executed, to implement the method of any one of claims 1 to 9.

22. A computer-readable storage medium for storing instructions, in response to the instructions being executed, to implement the method of any one of claims 10 to 14.

A first cross-correlation coefficient for a left channel signal and a right channel signal of a current frame of a stereo audio signal is determined ⌐101

In response to the first cross-correlation coefficient being less than a first threshold, a first decorrelation processing method is used to decorrelate the current frame of the stereo audio signal to obtain two decorrelation processed channel signals, a second cross-correlation coefficient of the two decorrelation processed channel signals is calculated, and in response to the first cross-correlation coefficient being less than the second cross-correlation coefficient, a flag bit is determined to be a first value, and a coded stream is obtained based on the two decorrelation processed channel signals and the flag bit is written to the coded stream ⌐102

FIG. 1a

FIG. 1b

The first cross-correlation coefficient for the left channel signal and the right channel signal of the current frame of the stereo audio signal is determined — 201

In response to the first cross-correlation coefficient being greater than a second threshold, a second decorrelation processing method is used to decorrelate the current frame of the stereo audio signal to obtain the two decorrelation processed channel signals, a third cross-correlation coefficient of the two decorrelation processed channel signals is calculated, and in response to the first cross-correlation coefficient being greater than the third cross-correlation coefficient, the flag bit is determined to be a second value, and the coded stream is obtained based on the two decorrelation processed channel signals and the flag bit is written to the coded stream — 202

FIG. 2

The first cross-correlation coefficient for the left channel signal and the right channel signal of the current frame of a stereo audio signal is determined — 301a

In response to the first cross-correlation coefficient being greater than or equal to the first threshold and less than or equal to the second threshold, the current frame of the stereo audio signal is directly determined as two decorrelation processed channel signals, a flag bit is determined to be a third value, the coded stream is obtained based on the two decorrelation processed channel signals and the flag bit is written to the coded stream — 302a

FIG. 3a

The first cross-correlation coefficient for the left channel signal and the right channel signal of the current frame of the stereo audio signal is determined

301b

In response to the first cross-correlation coefficient being less than the first threshold, the first decorrelation processing method is used to decorrelate the current frame of the stereo audio signal to obtain the two decorrelation processed channel signals, the second cross-correlation coefficient of the two decorrelation processed channel signals is calculated, and in response to the first cross-correlation coefficient being greater than or equal to the second cross-correlation coefficient, the current frame of the stereo audio signal is directly determined as the two decorrelation processed channel signals, the flag bit is determined as the third value, and the coded stream is obtained based on the two decorrelated processed channel signals and the flag bit is written into the coded stream

302b

FIG. 3b

The first cross-correlation coefficient for the left channel signal and the right channel signal of the current frame of the stereo audio signal is determined

301c

In response to the first cross-correlation coefficient being greater than the second threshold, the second decorrelation processing method is used to decorrelate the current frame of the stereo audio signal to obtain the two decorrelation processed channel signals, the third cross-correlation coefficient of the two decorrelation processed channel signals is calculated, and in response to the first cross-correlation coefficient being less than or equal to the third cross-correlation coefficient, the current frame of the stereo audio signal is directly determined as the two decorrelation processed channel signals, the flag bit is determined as the third value, and the coded stream is obtained based on the two decorrelated channel signals and the flag bit is written into the coded stream

302c

FIG. 3c

The coded stream transmitted by the coding device is obtained — 401

The two decorrelation processed channel signals and the flag bit is determined based on the coded stream — 402

In response to the flag bit being the first value, a reconstructed audio signal is obtained by reconstructing the two decorrelation processed channel signals using the first decorrelation reconstructing method, and the reconstructed audio signal is output — 403

FIG. 4a

FIG. 4b

The coded stream transmitted by the coding device is obtained ⟋ 501

The two decorrelation processed channel signals and the flag bit are determined based on the coded stream ⟋ 502

In response to the flag bit being the second value, the reconstructed audio signal is obtained by reconstructing the two decorrelation processed channel signals using the second decorrelation reconstructing method, and the reconstructed audio signal is output ⟋ 503

FIG. 5

A coded stream transmitted by the coding device is obtained ⟋ 601

Two decorrelation processed channel signals and a flag bit are determined based on the coded stream ⟋ 602

In response to the flag bit being the third value, the two decorrelation processed channel signals are determined as a reconstructed audio signal directly ⟋ 603

FIG. 6

700

Stereo audio signal processing
apparatus

701

Determining module

702

Processing module

FIG. 7

800

Stereo audio signal processing
apparatus

801

Obtaining module

802

Determining module

803

Processing module

FIG. 8

FIG. 9

FIG. 10

## INTERNATIONAL SEARCH REPORT

| International application No. |
| --- |
| **PCT/CN2021/133722** |

**A.    CLASSIFICATION OF SUBJECT MATTER**

H04R 5/00(2006.01)i

According to International Patent Classification (IPC) or to both national classification and IPC

**B.    FIELDS SEARCHED**

Minimum documentation searched (classification system followed by classification symbols)

H04R; H03M; G10L

Documentation searched other than minimum documentation to the extent that such documents are included in the fields searched

Electronic data base consulted during the international search (name of data base and, where practicable, search terms used)

WPABSC; CNTXT; WPABS; ENTXT; CJFD; DWPI; ENTXTC; VEN: 小于, 相关系数, 声道, 相关水平, 解相关, 互相关系数, 去相关, 立体声, 编码, stereo, cross-correlation, coefficient, channel, encod+, decorrelation, less

**C.    DOCUMENTS CONSIDERED TO BE RELEVANT**

| Category* | Citation of document, with indication, where appropriate, of the relevant passages | Relevant to claim No. |
| --- | --- | --- |
| X | CN 102368385 A (ZHONGKE KAIYUAN INFORMATION TECHNOLOGY (BEIJING) CO., LTD.) 07 March 2012 (2012-03-07)<br>    description, paragraphs [0126]-[0238] | 10-14, 16, 18, 20, 22 |
| A | CN 102368385 A (ZHONGKE KAIYUAN INFORMATION TECHNOLOGY (BEIJING) CO., LTD.) 07 March 2012 (2012-03-07)<br>    ditto | 1-9, 15, 17, 19, 21 |
| A | CN 110495105 A (HUAWEI TECHNOLOGIES CO., LTD.) 22 November 2019 (2019-11-22)<br>    entire document | 1-22 |
| A | US 2008226085 A1 (TAKASHIMA NORIYUKI) 18 September 2008 (2008-09-18)<br>    entire document | 1-22 |

☐ Further documents are listed in the continuation of Box C.       ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 February 2022** | **10 March 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/133722**

| Patent document cited in search report | | | Publication date (day/month/year) | Patent family member(s) | | | Publication date (day/month/year) |
|---|---|---|---|---|---|---|---|
| CN | 102368385 | A | 07 March 2012 | CN | 102368385 | B | 14 August 2013 |
| CN | 110495105 | A | 22 November 2019 | JP | 2020516955 | A | 11 June 2020 |
| | | | | JP | 6874151 | B2 | 19 May 2021 |
| | | | | JP | 2021121853 | A | 26 August 2021 |
| | | | | CN | 108694955 | A | 23 October 2018 |
| | | | | WO | 2018188424 | A1 | 18 October 2018 |
| | | | | US | 2021014632 | A1 | 14 January 2021 |
| | | | | US | 11178505 | B2 | 16 November 2021 |
| | | | | KR | 20190134752 | A | 04 December 2019 |
| | | | | KR | 102281822 | B1 | 26 July 2021 |
| | | | | KR | 20210094143 | A | 28 July 2021 |
| | | | | US | 2020045494 | A1 | 06 February 2020 |
| | | | | US | 10827297 | B2 | 03 November 2020 |
| | | | | BR | 112019021361 | A2 | 05 May 2020 |
| | | | | EP | 3605847 | A1 | 05 February 2020 |
| | | | | EP | 3605847 | A4 | 25 March 2020 |
| | | | | US | 2022046376 | A1 | 10 February 2022 |
| US | 2008226085 | A1 | 18 September 2008 | US | 8195316 | B2 | 05 June 2012 |
| | | | | JP | 2008227788 | A | 25 September 2008 |
| | | | | JP | 5213339 | B2 | 19 June 2013 |

Form PCT/ISA/210 (patent family annex) (January 2015)